(19) Europäisches Patentamt
European Patent Office
Office européen des brevets

(11) **EP 2 789 656 B1**

(12) **EUROPÄISCHE PATENTSCHRIFT**

(45) Veröffentlichungstag und Bekanntmachung des Hinweises auf die Patenterteilung:
**22.04.2015 Patentblatt 2015/17**

(21) Anmeldenummer: **14161757.1**

(22) Anmeldetag: **26.03.2014**

(51) Int Cl.:
***C08L 83/06*** *(2006.01)*

(54) **Vernetzbare Massen auf der Basis von Organosiliciumverbindungen**

Crosslinkable compositions based on organosilicon compounds

Mesures pouvant être mises en réseau à base d'alliages de silicium organique

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.04.2013 DE 102013206266**

(43) Veröffentlichungstag der Anmeldung:
**15.10.2014 Patentblatt 2014/42**

(73) Patentinhaber: **Wacker Chemie AG**
**81737 München (DE)**

(72) Erfinder:
• **Ostendorf, Detlev**
 **01129 Dresden (DE)**

• **Scheim, Uwe**
 **01640 Coswig (DE)**
• **Schöley, Peter**
 **01665 Diera-Zehren (DE)**

(74) Vertreter: **Budczinski, Angelika et al**
**Wacker Chemie AG**
**Intellectual Property**
**Hanns-Seidel-Platz 4**
**81737 München (DE)**

(56) Entgegenhaltungen:
**EP-A1- 2 055 750 EP-A2- 0 885 921**
**WO-A2-01/53425**

EP 2 789 656 B1

**Beschreibung**

Die Erfindung betrifft vernetzbare Massen auf der Basis von Organosiliciumverbindungen, insbesondere RTV-1-Dichtmassen, in denen hochdisperse Metalloxide mit niedriger Oberfläche in Kombination mit Kohlenwasserstoffgemischen eingesetzt werden und welche im ausgehärteten Zustand eine hohe Weiterreißfestigkeit aufweisen, Verfahren zu deren Herstellung sowie deren Verwendung.

Unter Ausschluss von Wasser lagerfähige, bei Zutritt von Wasser bei Raumtemperatur zu Elastomeren kondensationsvernetzende Einkomponenten-Siliconkautschuk-Mischungen (RTV-1-Massen) sind seit langem bekannt. Diese Produkte werden in großen Mengen z.B. in der Bauindustrie als Fugendichtmasse eingesetzt. Die Basis dieser Mischungen sind Polydiorganosiloxane, die mindestens zwei reaktive Gruppen, wie etwa OH-, Acyloxy-, Oxim-, Al-koxy- oder Vinylgruppen, im Molekül enthalten. Des Weiteren können diese Massen Füllstoffe, Weichmacher, Vernetzer, Katalysatoren sowie Additive enthalten.

Die anwendungstechnischen Eigenschaften des.ausgehärteten Produktes sowie auch die spezifischen Eigenschaften der vernetzbaren Masse während der Applikation werden hauptsächlich durch die mittlere Kettenlänge der vernetzbaren Polydiorganosiloxane, durch die Anwesenheit von Weichmachern und durch die Aktivität der verstärkenden hochdispersen Füllstoffe, die u.a. mit der BET-Oberfläche der Füllstoffpartikel einhergeht, bestimmt. Weiterhin haben auch andere Komponenten, wie Haftvermittler und Vernetzer, einen Einfluss auf bestimmte Pasten- und Vulkanisat-Eigenschaften. Der Einfluss von Katalysatoren auf die mechanischen Vulkanisat-Eigenschaften der Masse kann sehr oft vernachlässigt werden.

Die einzelnen Rohstoffe und ihre Anteile in der RTV-1-Masse werden oft so gewählt, dass ein möglichst ausgewogenes Verhältnis der Materialeigenschaften erzielt wird. Dies ist insbesondere deshalb wichtig, weil oft durch eine Optimierung der Eigenschaften der Massen im unausgehärteten Zustand die Eigenschaften der Masse im ausgehärteten Zustand unerwünscht verändert werden. So führt z.B. zwar ein hoher Anteil an verstärkenden Füllstoffen, wie pyrogenes Siliciumdioxid, in der RTV-1-Dichtmasse zu einem gewollt hohen "body", also zu einer höheren Viskosität und damit zu einem höheren Widerstand gegen Verformung beim Glätten der Massen in einer abzudichtenden Fuge. Ein höherer Anteil an verstärkendem Füllstoff verringert aber gleichzeitig auch die Auspressrate der Paste aus der Kartusche und erhöht den Modul der vulkanisierten Masse drastisch (Zugspannungswert bei einer bestimmten Dehnung eines Prüfkörpers), was nicht erwünscht ist. Dies bedeutet dann oft, dass mindestens eine dieser Eigenschaften nicht optimal für die Anwendung eingestellt werden kann.

Weichmacher beeinflussen die rheologischen Eigenschaften der unausgehärteten Paste sowie die mechanischen Eigenschaften des ausgehärteten Silicongummis, beispielsweise erhöht sich durch den Ersatz von Siliconpolymer durch Siliconweichmacher oder organische Weichmacher die Auspressrate; die Härte wird jedoch verringert.

Weitere wichtige Eigenschaften der ausgehärteten und unausgehärteten RTV-1-Dichtmasse, die in der Regel nicht unabhängig voneinander beeinflusst werden können, sind z.B. Standfestigkeit, Volumenschwund oder auch Haftung auf verschiedenen Untergründen.

Üblicherweise werden für RTV-1-Dichtmassen im Baubereich als vernetzbare Polydiorganosiloxane hochviskose Polydimethylsiloxane mit hydrolysierbaren Endgruppen und einer dynamischen Viskosität von 10 000 bis 350 000 mPa·s bei 25°C verwendet. Sie vernetzen durch Abspaltung von z.B. Alkoholen, Oximen oder Essigsäure. Die eingesetzten Weichmacher müssen eine gute Verträglichkeit mit den venetzbaren Polydiorganosiloxanen aufweisen, damit sie im Produkt verbleiben und nicht aus dem vulkanisierten Silicongummi als ölige Flüssigkeit ausgeschieden werden (sog. Ausölen, Ausschwitzen bzw. Ausbluten des Vulkanisats). Es werden daher entweder Polydiorganosiloxane ohne hydrolysierbare Gruppen oder Kohlenwasserstoffgemische als Weichmacher bevorzugt. Übliche Weichmacher auf Polydiorganosiloxan-Basis sind trimethylsilylterminierte Polydimethylsiloxane, die eine dynamische Viskosität im Bereich von 100 bis 10 000 mPa·s bei 25°C aufweisen. Geeignete organische Weichmacher sind z.B. in EP-B1-885 921 beschrieben, etwa paraffinische Kohlenwasserstoffgemische, welche einen Siedebeginn oberhalb 290°C, eine kinematische Viskosität von 5 mm$^2$/s bis 10 mm$^2$/s, gemessen bei 40°C, eine Viskositätsdichtekonstante (VDK) kleiner 0,82 und ein Molekulargewicht von maximal 310 g/mol aufweisen und welche 60% bis 80% paraffinische, 20% bis 40% naphthenische und maximal 1% aromatische Kohlenstoffatome enthalten. Der Nachteil dieser Weichmacher besteht jedoch darin, dass sich bei größerer Einsatzmenge von mehr als 40 Gewichtsteilen, bezogen auf 100 Gewichtsteile vernetzbares Polydiorganosiloxan in der RTV-1-Mischung, Unverträglichkeiten mit der vulkanisierten Siloxanmatrix durch Ausölen höhermolekularer Bestandteile äußern, insbesondere wenn die Mischung gleichzeitig Bestandteile enthält, welche die rheologischen Eigenschaften der Paste beeinflussen, z.B. Polyglykole. Außerdem weisen die Vulkanisate, die in den Ausführungsbeispielen in EP-B1-885 921 genannt werden, niedrige Weiterreißfestigkeiten auf; nach derzeitigem Stand der Technik weisen Baudichtmassen Weiterreißfestigkeiten zwischen 3 und 6 N/mm, gemessen nach DIN ISO 34-1 Methode C, auf. Letzteres trifft auch auf RTV-1-Mischungen zu, die Kohlenwasserstoffgemische mit niedrigerem Siedebereich enthalten. So sind gut verträgliche Kohlenwasserstoffgemische aus US 6,451,440 B2 bekannt, die 45-75 Gewichts-% naphthenische und 25-55 Gewichts-% nichtcyclische paraffinische Kohlenwasserstoffe enthalten. Andere Kohlenwasserstoffgemische, die sehr gut mit den hochviskosen, vernetzbaren Polydimethylsiloxanen verträglich sind, führen häufig zu einem ungewollt hohen Volumenschwund, weisen Unverträglichkeiten mit der Siloxanmatrix bei tieferen Temperaturen auf oder führen schnell zur Vergilbung des Materials.

Als Füllstoffe werden hauptsächlich hochdisperse pyrogene Siliciumdioxide verwendet, denn damit lassen sich auch transparente Massen herstellen. Aus technischen Gründen haben sich hochdisperse Siliciumdioxide mit BET-Oberflächen von 130 bis 200 $m^2$/g durchgesetzt. Bevorzugt werden Typen mit 130 bis 150 $m^2$/g verwendet. EP-B1-1 884 541 beschreibt z.B. ein Verfahren zur kontinuierlichen Herstellung von RTV-1-Dichtmassen, bei dem ein Siliciumdioxid mit einer BET-Oberfläche von 150 $m^2$/g eingesetzt wird.

Hochdisperse pyrogene Siliciumdioxide geringerer Aktivität, d.h. mit BET-Oberflächen von unter 120 $m^2$/g, finden in der Praxis kaum Verwendung, weil sie eine ungenügende Verstärkungswirkung aufweisen. Bei geringen Einsatzmengen werden Massen mit niedriger Viskosität und daher ungenügender Standfestigkeit und bei großen Einsatzmengen Massen mit zu hohem Modul erhalten.

US-A1-2008/0245476 beschreibt die Verwendung von Siliciumdioxiden mit BET-Oberflächen von 10 bis 90 $m^2$/g zur Herstellung von silanvernetzenden Polyethern mit hoher Zugscherfestigkeit. Bei einem Anteil von 15 Gewichts-% an hochdisperser Kieselsäure sind aber die beschriebenen, weichmacherfreien Massen wegen zu geringer Dehnbarkeit zum Abdichten von Baufugen nicht geeignet. Außerdem weisen Massen auf Basis von Polyethern eine viel zu geringe chemische Stabilität bei Anwendungen im Außenbereich auf.

Hochdisperse pyrogene Siliciumdioxide mit sehr hohen BET-Oberflächen von über 150 $m^2$/g weisen eine zu hohe Verdickungswirkung auf. Außerdem haben diese Siliciumdioxide ebenfalls den Nachteil, dass sich anwendungstechnische Eigenschaften wie ausgezeichnete Standfestigkeiten, optimale Auspressraten und niedrige Zugspannungswerte bei Dehnung nicht gleichzeitig in Einklang bringen lassen. Zusätzlich ist die Compoundierung mit diesen hochaktiven Siliciumdioxidtypen wesentlich schwieriger, da sie eine deutlich schlechtere Dispergierbarkeit aufweisen, insbesondere bei den notwendig geringeren Einsatzmengen.

Üblicherweise sind in RTV-1-Dichtmassen, die keine weiteren Füllstoffe wie z.B. Calciumcarbonat enthalten, hochdisperse Siliciumdioxide in Mengen von ca. 6 bis 12 Gewichts-% bezogen auf das Gesamtgewicht enthalten. Die Massen lassen sich dann leicht aus Kartuschen ausdrücken, weisen beim Glätten einen ausreichend hohen Widerstand gegen Verformung auf, fließen nicht aus senkrechten Fugen heraus und härten zu gummielastischen Materialien mit niedrigem Modul aus. Solche Massen sind damit sehr gut für die Abdichtung von Baufugen geeignet.

Unbefriedigend ist allerdings die geringe Weiterreißfestigkeit dieser Dichtmassen. Es wäre daher wünschenswert, dass RTV-1-Dichtmassen mit hoher Weiterreißfestigkeit bereitgestellt werden könnten.

Gegenstand der Erfindung sind durch Kondensationsreaktion vernetzbare Massen enthaltend

(A) mindestens eine Organosiliciumverbindung mit mindestens zwei kondensationsfähigen Resten,
(B) mindestens ein hochdisperses Siliciumdioxid mit einer BET-Oberfläche von 30 bis 120 $m^2$/g und einer relativen Verdickungswirkung $\eta_{rel}$ von 1,4 bis 10

und

(C) mindestens eine Kohlenwasserstoffkomponente, welche einen Siedebeginn oberhalb 150°C, einen Siedeendpunkt unterhalb 350°C, jeweils bei einem Druck von 1013 hPa, eine kinematische Viskosität von 1,5 bis 6,0 $mm^2$/s gemessen bei 40°C, eine Viskositäts-Dichte-Konstante (VDK) von kleiner oder gleich 0,820, einen Pourpoint von kleiner -5°C und einen Gehalt an aromatischen Kohlenstoffatomen ($C_A$) von weniger als 0,1% $C_A$ aufweist.

Im Rahmen der vorliegenden Erfindung wird die BET-Oberfläche bestimmt nach DIN ISO 9277/DIN 66132.

Als Verdickungswirkung wird im Rahmen der vorliegenden Erfindung der dynamische Viskositätswert in mPa·s einer Dispersion bei 25°C bezeichnet, der mit einem Rotationsviskosimeter (RS600 der Firma Haake, Messsystem nach DIN 53019, Kegel-Platte, C60/2 Ti) bei einer Scherrate von 10 $s^{-1}$ ermittelt wird. Die "relative Verdickungswirkung" $\eta_{rel}$ ist der Quotient aus $\eta$ und $\eta_0$, wobei $\eta$ die dynamische Viskosität der Flüssigkeit mit Siliciumdioxid und $\eta_0$ der dynamischen Viskosität der reinen Flüssigkeit ohne Siliciumdioxid entspricht: $\eta_{rel} = \eta/\eta_0$. Die Dispersion wird erhalten, indem bei einer Temperatur von 23°C in einem 0,5 l Becher 4,5 g Siliciumdioxidpulver zu 145,5 g einer Lösung eines ungesättigten Polyesterharzes auf Isophthalsäurebasis in Styrol, die eine dynamische Viskosität von 1000 ± 100 mPa·s bei 23°C und einem Styrolmassenanteil von 34%, gemessen nach DIN 16945, 4.14, aufweist (käuflich erhältlich unter dem Namen Palatal® P6 bei der BASF SE, D-Ludwigshafen), einrührt und anschließend mittels eines Dissolvers (Pendraulik Labordissolver LD 50 mit Zahnscheibe 40 mm) bei 2800 $min^{-1}$ 5 min dispergiert. Der Abstand der Dissolverscheibe zum Becherboden beträgt dabei ca. 20 mm. Der Becher wird während des Dispergierens mit einem durchbohrten Deckel abgedeckt.

Im Rahmen der vorliegenden Erfindung wird die dynamische Viskosität der Organosiliciumverbindungen (A) nach DIN 53019 bei, sofern nicht anders angegeben, 25°C mittels eines Rotationsrheometers "Physica MCR 300" von der Firma Anton Paar gemessen. Dabei wird für Viskositäten von 10 bis 200 mPa·s ein koaxiales Zylinder-Messsystem (CC 27) mit einem Ring-Messspalt von 1,13 mm genutzt und für Viskositäten von größer als 200 mPa·s ein Kegel-Platte-Messsystem (Searle-System mit Messkegel CP 50-1) verwendet. Die Schergeschwindigkeit wird der Polymerviskosität angepasst (5 bis 99 mPa·s bei 100 1/s; 100 bis 999 mPa·s bei 200 1/s; 1000 bis 2999 mPa·s bei 120 1/s; 3000 bis 4999 mPa·s bei 80 1/s; 5000 bis 9999 mPa·s bei 62 1/s; 10000 bis 12499 mPa·s bei 50 1/s; 12500 bis 15999 mPa·s bei 38,5 1/s; 16000 bis 19999 mPa·s bei 33 1/s; 20000 bis 24999 mPa·s bei 25 1/s; 25000 bis 29999 mPa·s bei 20 1/s; 30000 bis 39999 mPa·s bei 17 1/s; 40000 bis 59999 mPa·s bei 10 1/s; 60000 bis 149999 bei 5 1/s; 150000 bis 199999 mPa·s bei 3,3 1/s; 200000 bis 299999 mPa·s bei 2,5 1/s; 300000 bis 1000000 mPa·s bei 1,5 1/s).

Nach Temperierung des Messsystems auf die Messtemperatur wird ein dreistufiges Messprogramm bestehend aus einer Einlaufphase, einer Vorscherung und Viskositäts-Messung angewandt. Die Einlaufphase erfolgt durch stufenweise Erhöhung der Schergeschwindigkeit innerhalb einer Minute auf die oben angegebene von der zu erwartenden Viskosität abhängige Schergeschwindigkeit bei der die Messung erfolgen soll. Sobald diese erreicht ist, erfolgt bei konstanter Schergeschwindigkeit die Vorscherung für 30 s, anschließend werden zur Bestimmung der Viskosität 25 Einzelmessungen für je 4,8 Sekunden durchgeführt, aus denen der Mittelwert bestimmt wird. Der Mittelwert entspricht der dynamischen Viskosität, die in mPa·s angegeben wird.

Der Siedebeginn sowie der Siedeendpunkt wird jeweils nach ASTM D 86 bestimmt.

Die kinematische Viskosität wird gemessen bei 40°C nach ASTM D 445-12.

Die Viskositäts-Dichte-Konstante (VDK) wird ermittelt nach ASTM D 2140-08. Die für die Berechnung der VDK erforderliche relative Dichte wird gemessen bei 15,6°C nach ASTM D 1481-12.

Der Pourpoint wird gemessen nach ASTM D 97.

Im Rahmen der vorliegenden Erfindung soll die Bezeichnung "Kondensationsreaktion" auch einen gegebenenfalls vorangehenden Hydrolyseschritt mitumfassen.

Bei den erfindungsgemäßen Massen kann es sich um einkomponentige oder mehrkomponentige Massen handeln, wobei es sich bevorzugt um einkomponentige, unter Ausschluss von Wasser lagerfähige, bei Zutritt von Wasser bei Raumtemperatur vernetzbare Massen (RTV-1) handelt.

Im Rahmen der vorliegenden Erfindung sollen unter der Bezeichnung "kondensationsfähige Reste" auch solche Reste verstanden werden, die einen gegebenenfalls vorangehenden Hydrolyseschritt miteinschließen.

Bei den kondensationsfähigen Gruppen, welche die eingesetzten, an der Vernetzungsreaktion beteiligten Organosiliciumverbindungen aufweisen, kann es sich um beliebige Gruppen handeln, bevorzugt um Hydroxy-, Organyloxy-, Oximo-, Amino-, Aminoxy- oder Acyloxygruppen.

Bei den erfindungsgemäß eingesetzten Organosiliciumverbindungen (A) kann es sich um alle Organosiliciumverbindungen mit mindestens zwei kondensationsfähigen Gruppen handeln, die auch bisher in durch Kondensationsreaktion vernetzbaren Massen eingesetzt worden sind. Es kann sich dabei sowohl um reine Siloxane, also $\equiv$Si-O-Si$\equiv$ -Strukturen, als auch um Silcarbane, also $\equiv$Si-R''-Si$\equiv$ -Strukturen mit R'' gleich einem zweiwertigen, gegebenenfalls substituierten oder mit Heteroatomen unterbrochenen Kohlenwasserstoffrest oder beliebigen Organosiliciumgruppen aufweisende Polymere und Copolymere handeln.

Bevorzugt handelt es sich bei den erfindungsgemäß eingesetzten Organosiliciumverbindungen (A) um solche enthaltend Einheiten der Formel

$$R_a Y_b SiO_{(4-a-b)} \qquad (I),$$

wobei

R gleich oder verschieden sein kann und gegebenenfalls substituierte Kohlenwasserstoffreste, die durch Sauerstoffatome unterbrochen sein können, bedeutet,

Y gleich oder verschieden sein kann und Hydroxylrest oder hydrolysierbare Reste bedeutet,

a 0, 1, 2 oder 3, bevorzugt 1 oder 2, ist und

b 0, 1, 2 oder 3, bevorzugt 0, 1 oder 2, besonders bevorzugt Ö oder 1, ist,

mit der Maßgabe, dass die Summe aus a+b kleiner oder gleich 3 ist und pro Molekül mindestens zwei Reste Y anwesend sind.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der $\alpha$- und der $\beta$-Phenylethylrest.

Beispiele für substituierte Reste R sind Halogenalkylreste, wie der 3,3,3-Trifluorprop-1-ylrest, der 1,1,1,3,3,3-Hexafluorprop-2-ylrest und der Heptafluorprop-2-ylrest, Halogenarylreste, wie der o-, m- und p-Chlorphenylrest, Alkoxyalkylreste wie der 2-Methoxyethylrest, der 2-Ethoxyethylrest der 2-Methoxyprop-1-ylrest der 2-(2-Methoxyethoxy)ethylrest und der 2-(2-Ethoxyethoxy)ethylrest, Acryloxyreste wie der 3-Methacryloxypropylrest, Epoxidreste, wie der 3-Glycidoxypropylrest, Aminoalkylreste wie der 3-Aminopropylrest, der N-(2-Aminoethyl)-3-aminopropylrest, der (2,3,5,6-Tetrahydro-1,4-oxazin-4-yl)methylrest, der (N,N-Di-n-butylamino)methylrest, der (N-Cyclohexylamino)methylrest, der (N-n-butylamino)methylrest, der (2,3,4,5-Tetrahydropyrrol-1-yl)methylrest und der (2,3,4,5,6-Hexahydropyridin-1-yl)methylrest.

Es kann sich bei Rest R aber auch um zweiwertige Reste handeln, die z.B. zwei Silylgruppen miteinander verbinden, was jedoch nicht bevorzugt ist. Beispiele für zweiwertige Reste R sind Polyisobutylendiylreste und propandiylterminierte Polypropylenglykolreste.

Bevorzugt handelt es sich bei Rest R um einwertige Kohlenwasserstoffreste mit 1 bis 18 Kohlenstoffatomen, die gegebenenfalls mit Halogenatomen, Aminogruppen, Ethergruppen, Estergruppen, Epoxygruppen, Mercaptogruppen, Cyanogruppen, Acryloxyresten, Trimethoxysilylethylgruppen, Triethoxysilylethylgruppen, oder (Poly)glykolresten substituiert sind, wobei letztere aus Oxyethylen- und/oder Oxypropyleneinheiten aufgebaut sind, besonders bevorzugt um Alkylreste mit 1 bis 12 Kohlenstoffatomen, den Vinyl-, Phenyl- oder (2,3,5,6-Tetrahydro-1,4-oxazin-4-yl)methylrest. Bevorzugt haben mindestens 90% der Reste R in der Organosiliciumverbindung (A) die Bedeutung von Methylrest. In Organosiliciumverbindung (A) sind Reste R gleich (2,3,5,6-Tetrahydro-1,4-oxazin-4-yl)methylrest bevorzugt an das Reste Y tragende Siliciumatom gebunden.

Beispiele für Reste Y sind der Hydroxylrest sowie alle bisher bekannten hydrolysierbaren Reste, wie z.B. über Sauerstoffatom oder Stickstoffatom an Siliciumatom gebundene, gegebenenfalls substituierte Kohlenwasserstoffreste.

Bevorzugt handelt es sich bei Rest Y um Hydroxylrest, Organyloxyrest, wie Methoxy-, Ethoxy-, n-Propoxy-, iso-Propoxy-, n-Butoxy-, iso-Butoxy-, sec-Butoxy-, tert-Butoxy- und 2-Methoxyethoxyrest; Aminorest, wie Methylamino-, Dimethylamino-, Ethylamino-, Diethylamino- und Cyclohexylaminorest; Amidorest, wie N-Methylacetamido- und Benzamidorest; Aminoxyrest, wie der Diethylaminoxyrest; Oximorest, wie Methylethylketoximo-, Methyliso-butylketoximo-, Methyl-n-butylketoximo-, Methyl-iso-propylketoximo-, Methyl-n-propylketoximo-, Methyl-iso-pentylketoximo-, Methyl-neo-pentylketoximo-, Methyl-n-pentylketoximo-, Methyl-sec-pentylketoximo- und Dimethylketoximorest; Enoxyrest, wie der 2-Propenoxyrest; Acyloxyrest, wie Acetoxyrest; oder Lactatrest.

Besonders bevorzugt handelt es sich bei Rest Y um Hydroxylrest sowie um Methoxy-, Ethoxy-, Acetoxy-, Methyllactat-, Ethyllactat-, Methylethylketoximo-, Methyl-n-butylketoximo-, Methyliso-butylketoximo-, Methyl-n-propylketoximo-, Methyl-iso-propylketoximo- oder Dimethylketoximorest.

Insbesondere handelt es sich bei Rest Y um Hydroxylrest sowie um Methoxy-, Ethoxy-, Dimethylketoximo-, Methyl-n-propylketoximo-, Methyl-iso-propylketoximo- oder Acetoxyrest.

Besonders bevorzugt handelt es sich bei erfindungsgemäß eingesetzten Organosiliciumverbindungen (A) um solche der Formel

$$Y_{3-f}R_fSi\text{-}O\text{-}(SiR_2\text{-}O)_e\text{-}SiR_fY_{3-f} \qquad (II),$$

wobei

R und Y jeweils gleich oder verschieden sein können und eine der oben angegebenen Bedeutungen haben,

e gleich 30 bis 3000 ist und

f gleich 0, 1 oder 2 ist.

Vorzugsweise ist f gleich 2, wenn Y gleich -OH ist, und f gleich 1 oder 0, wenn Y verschieden -OH ist.

Beispiele für Organosiliciumverbindungen (A) sind solche der Formel $Y_{3-f}R_fSi\text{-}O\text{-}[SiMe_2O]_{30\text{-}2000}\text{-}SiR_fY_{3-f}$, wobei die Endgruppen $-SiR_fY_{3-f}$, die gleich oder verschieden sein können, stehen für

Alkoxysilylendgruppen, z.B. $-Si(OMe)_2Me$, $-Si(OMe)_3$, $-Si(OEt)_2Me$, $-Si(OMe)(OEt)Me$, $-Si(OMe)_2Et$, $-Si(OEt)_2Et$, $-Si(OEt)_3$, $-Si(OMe)(OEt)Et$, $-Si(OMe)_2(n\text{-}C_8H_{17})$, $-Si(OEt)_2(n\text{-}C_8H_{17})$, $-Si(OMe)(OEt)(n\text{-}C_8H_{17})$, $-Si(OMe)_2(CH_2\text{-}CH(CH_3)\text{-}CH_2\text{-}C(CH_3)_2\text{-}CH_3)$, $-Si(OEt)_2(CH_2\text{-}CH(CH_3)\text{-}CH_2\text{-}C(CH_3)_2\text{-}CH_3)$, $-Si(OMe)(OEt)(CH_2\text{-}CH(CH_3)\text{-}CH_2\text{-}C(CH_3)_2\text{-}CH_3)$, $-Si(OMe)_2(CH_2\text{-}CH(CH_2\text{-}CH_3)\text{-}(CH_2)_3\text{-}CH_3)$, $-Si(OEt)_2(CH_2\text{-}CH(CH_2\text{-}CH_3)\text{-}(CH_2)_3\text{-}CH_3)$, $-Si(OMe)(OEt)(CH_2\text{-}CH(CH_2\text{-}CH_3)\text{-}(CH_2)_3\text{-}CH_3)$, $-Si(OMe)_2Vi$, $-Si(OEt)_2Vi$, $-Si(OMe)(OEt)Vi$, $-Si(OMe)_2Ph$, $-Si(OEt)_2Ph$, $-Si(OMe)(OEt)Ph$, $-Si(OMe)_2(CH_2\text{-}N(n\text{-}C_4H_9)_2)$, $-Si(OEt)_2(CH_2\text{-}N(n\text{-}C_4H_9)_2)$, $-Si(OMe)_2(CH_2\text{-}NH(C_4H_9))$, $-Si(OEt)_2(CH_2\text{-}NH(C_4H_9))$, $-Si(OMe)_2(CH_2\text{-}NH(cyclo\text{-}C_6H_{11}))$, $-Si(OEt)_2(CH_2\text{-}NH(cyclo\text{-}C_6H_{11}))$, $-Si(OMe)_2(CH_2\text{-}(2,3,5,6\text{-}tetrahydro\text{-}1,4\text{-}oxazin\text{-}4\text{-}yl))$, $-Si(OEt)_2(CH_2\text{-}(2,3,5,6\text{-}tetrahydro\text{-}1,4\text{-}oxazin\text{-}4\text{-}yl))$, $-Si(OMe)_2(CH_2\text{-}(2,3,4,5\text{-}Tetrahydropyrrol\text{-}1\text{-}yl))$, $-Si(OEt)_2(CH_2\text{-}(2,3,4,5\text{-}Tetrahydropyrrol\text{-}1\text{-}yl))$, $-Si(OMe)_2(CH_2\text{-}(2,3,4,5,6\text{-}Hexahydropyridin\text{-}1\text{-}yl))$, $-Si(OEt)_2(CH_2\text{-}(2,3,4,5,6\text{-}Hexahydropyridin\text{-}1\text{-}yl))$;

Acetyloxysilylendgruppen, z.B. $-SiMe(O\text{-}CO\text{-}(CH_3))_2$, $-SiEt(O\text{-}CO\text{-}(CH_3))_2$, $-SiVi(O\text{-}CO\text{-}(CH_3))_2$, $-Si(O\text{-}CO\text{-}(CH_3))_3$, $-Si(n\text{-}C_8H_{17})(O\text{-}CO\text{-}(CH_3))_2$, $-Si(CH_2\text{-}CH(CH_3)\text{-}CH_2\text{-}C(CH_3)_2\text{-}CH_3)(O\text{-}CO\text{-}(CH_3))_2$, $-Si(CH_2\text{-}CH(CH_2\text{-}CH_3)\text{-}(CH_2)_3\text{-}CH_3)(O\text{-}CO\text{-}(CH_3))_2$;

Oximosilylendgruppen, z.B. $-SiMe(OMe)(O\text{-}N=C(Me)(Et))$, $-SiVi(OMe)(O\text{-}N=C(Me)(Et))$, $-SiPh(OMe)(O\text{-}N=C(Me)(Et))$, $-SiEt(OMe)(O\text{-}N=C(Me)(Et))$, $-SiMe(OEt)(O\text{-}N=C(Me)(Et))$, $-SiVi(OEt)(O\text{-}N=C(Me)(Et))$, $-SiPh(OEt)(O\text{-}N=C(Me)(Et))$, $-SiEt(OEt)(O\text{-}N=C(Me)(Et))$, $-Si(OMe)_2(O\text{-}N=C(Me)(Et))$, $-Si(OEt)_2(O\text{-}N=C(Me)(Et))$, $-Si(OMe)(O\text{-}N=C(Me)(Et))_2$, $-Si(OEt)(O\text{-}N=C(Me)(Et))_2$, $-SiMe(O\text{-}N=C(Me)(Et))_2$, $-SiEt(O\text{-}N=C(Me)(Et))_2$, $-SiVi(O\text{-}N=C(Me)(Et))_2$, -SiPh(O-

N=C(Me)(Et))$_2$, -Si(O-N=C(Me)(Et))$_3$, -Si(n-C$_8$H$_{17}$)(O-N=C(Me)(Et))$_2$, -Si(CH$_2$-CH(CH$_3$)-CH$_2$-C(CH$_3$)$_2$-CH$_3$) (O-N=C(Me)(Et))$_2$, -Si(CH$_2$-CH(CH$_2$-CH$_3$)-(CH$_2$)$_3$-CH$_3$)(O-N=C (Me)(Et))$_2$, -Si (n-C$_8$H$_{17}$) (OMe) (O-N=C (Me) (Et))$_2$, -Si(CH$_2$-CH (CH$_3$) -CH$_2$-C(CH$_3$)$_2$-CH$_3$)(OMe) (O-N=C (Me) (Et)), -Si (CH$_2$-CH(CH$_2$-CH$_3$)-(CH$_2$)$_3$-CH$_3$) (OMe) (O-N=C(Me) (Et)), -Si (n-C$_8$H$_{17}$)(OEt) (O-N=C (Me)(Et)), -Si(CH$_2$-CH(CH$_3$)-CH$_2$-C(CH$_3$)$_2$-CH$_3$) (OEt) (O-N=C(Me) (Et)), -Si(CH$_2$-CH(CH$_2$-CH$_3$)-(CH$_2$)$_3$-CH$_3$) (OEt) (O-N=C(Me) (Et)), -SiMe(OMe) (O-N=C(Me) (iso-C$_4$H$_9$)), -SiVi(OMe) (O-N=C(Me) (iso-C$_4$H$_9$)), -SiPh(OMe) (O-N=C(Me) (iso-C$_4$H$_9$)), -SiEt (OMe) (O-N=C(Me) (iso-C$_4$H$_9$)), -SiMe (OEt) (O-N=C(Me) (iso-C$_4$H$_9$)), -SiVi(OEt) (O-N=C(Me) (iso-C$_4$H$_9$)), -SiPh(OEt) (O-N=C (Me) (iso-C$_4$H$_9$)), -SiEt (OEt) (O-N=C(Me) (iso-C$_4$H$_9$)), -Si(OMe)$_2$(O-N=C(Me) (iso-C$_4$H$_9$)), -Si(OEt)$_2$(O-N=C(Me) (iso-C$_4$H$_9$)), -Si (OMe) (O-N=C (Me) (iso-C$_4$H$_9$))$_2$, -Si (OEt) (O-N=C (Me) (iso-C$_4$H$_9$))$_2$, -SiMe(O-N=C (Me) (iso-C$_4$H$_9$))$_2$, -SiEt (O-N=C (Me) (iso-C$_4$H$_9$))$_2$, -SiVi(O-N=C (Me) (iso-C$_4$H$_9$))$_2$, -SiPh (O-N=C (Me) (iso-C$_4$H$_9$))$_2$, -Si(O-N=C (Me) (iso-C$_4$H$_9$))$_3$, -SiMe(OMe)(O-N=C(Me)(n-C$_5$H$_{11}$)), -SiVi (OMe) (O-N=C(Me)(n-C$_5$H$_{11}$)), -SiPh (OMe) (O-N=C(Me)(n-C$_5$H$_{11}$)), -SiEt (OMe) (O-N=C(Me)(n-C$_5$H$_{11}$)), -SiMe (OEt) (O-N=C(Me)(n-C$_5$H$_{11}$)), -SiVi(OEt)(O-N=C(Me)(n-C$_5$H$_{11}$)), -SiPh (OEt) (O-N=C(Me)(n-C$_5$H$_{11}$)), -SiEt (OEt) (O-N=C(Me)(n-C$_5$H$_{11}$)), -Si (OMe)$_2$ (O-N=C(Me)(n-C$_5$H$_{11}$)), -Si(OEt)$_2$(O-N=C (Me)(n-C$_5$H$_{11}$)), -Si (OMe) (O-N=C (Me) (n-C$_5$H$_{11}$)$_2$, -Si (OEt) (O-N=C(Me)(n-C$_5$H$_{11}$)$_2$, -SiMe(O-N=C(Me)(n-C$_5$H$_n$)$_2$, -SiEt(O-N=C (Me) (n-C$_5$H$_n$)$_2$, -SiVi(O-N=C(Me)(n-C$_5$H$_{11}$)$_2$, -SiPh(O-N=C(Me) (n-C$_5$H$_{11}$)$_2$, -Si(O-N=C(Me)(n-C$_5$H$_{11}$)$_3$, -SiMe (OMe)(O-N=C(Me)(iso-C$_5$H$_{11}$), -SiVi(OMe)(O-N=C(Me)(iso-C$_5$H$_{11}$), -SiPh(OMe) (O-N=C(Me)(iso-C$_5$H$_{11}$), -SiEt (OMe)(O-N=C(Me)(iso-C$_5$H$_{11}$), -SiMe (OEt) (O-N=C(Me)(iso-C$_5$H$_{11}$), -SiVi(OEt) (O-N=C(Me)(iso-C$_5$H$_{11}$), -SiPh(OEt)(O-N=C(Me)(iso-C$_5$H$_{11}$), -SiEt (OEt) (O-N=C(Me)(iso-C$_5$H$_{11}$), -Si(OMe)$_2$(O-N=C(Me)(iso-C$_5$H$_{11}$),- Si(OEt)$_2$(O-N=C(Me)(iso-C$_5$H$_{11}$), -Si(OMe)(O-N=C(Me)(iso-C$_5$H$_{11}$)$_2$, -Si(OEt)(O-N=C(Me)(iso-C$_5$H$_{11}$)$_2$, -SiMe(O-N=C(Me)(iso-C$_5$H$_{11}$)$_2$, -SiEt(O-N=C(Me)(iso-C$_5$H$_{11}$)$_2$, -SiVi(O-N=C(Me)(iso-C$_5$H$_{11}$)$_2$, -SiPh(O-N=C(Me)(iso-C$_5$H$_{11}$)$_2$, -Si(O-N=C(Me)(iso-C$_5$H$_{11}$)$_3$, -SiMe (OMe) (O-N=C (Me) (sec-C$_5$H$_{11}$), -SiVi(OMe)(O-N=C(Me)(sec-C$_5$H$_{11}$), -SiPh(OMe)(O-N=C(Me)(sec-C$_5$H$_{11}$), -SiEt (OMe)(O-N=C(Me)(sec-C$_5$H$_{11}$), -SiMe (OEt)(O-N=C(Me) (sec-C$_5$H$_{11}$), -SiVi(OEt)(O-N=C(Me)(sec-C$_5$H$_{11}$), -SiPh(OEt)(O-N=C(Me)(sec-C$_5$H$_{11}$), -SiEt (OEt)(O-N=C(Me) (sec-C$_5$H$_{11}$), -Si(OMe)$_2$(O-N=C(Me)(sec-C$_5$H$_{11}$), -Si(OEt)$_2$(O-N=C(Me)(sec-C$_5$H$_{11}$), -Si (OMe)(O-N=C(Me)(sec-C$_5$H$_{11}$)$_2$, -Si(OEt)(O-N=C(Me)(sec-C$_5$H$_{11}$)$_2$, -SiMe(O-N=C(Me)(sec-C$_5$H$_{11}$)$_2$, -SiEt(O-N=C(Me)(sec-C$_5$H$_{11}$)$_2$, -SiVi(O-N=C (Me)(sec-C$_5$H$_{11}$)$_2$, -SiPh(O-N=C(Me)(sec-C$_5$H$_{11}$)$_2$, -Si(O-N=C (Me)(sec-C$_5$H$_{11}$)$_3$, -SiMe (OMe)(O-N=C(Me)(neo-C$_5$H$_{11}$), -SiVi(OMe)(O-N=C(Me)(neo-C$_5$H$_{11}$), -SiPh (OMe) (O-N=C(Me)(neo-C$_5$H$_{11}$), -SiEt (OMe)(O-N=C(Me)(neo-C$_5$H$_{11}$), -SiMe (OEt) (O-N=C(Me)(neo-C$_5$H$_{11}$), -SiVi (OEt)(O-N=C(Me)(neo-C$_5$H$_{11}$), -SiPh (OEt) (O-N=C(Me)(neo-C$_5$H$_{11}$), -SiEt (OEt)(O-N=C(Me)(neo-C$_5$H$_{11}$), -Si (OMe)$_2$(O-N=C(Me)(neo-C$_5$H$_{11}$), -Si (OEt)$_2$(O-N=C (Me)(neo-C$_5$H$_{11}$), -Si (OMe)(O-N=C(Me)(neo-C$_5$H$_{11}$)$_2$, -Si(OEt)(O-N=C(Me)(neo-C$_5$H$_{11}$)$_2$, -SiMe(O-N=C(Me)(neo-C$_5$H$_{11}$)$_2$, -SiEt(O-N=C(Me)(neo-C$_5$H$_{11}$)$_2$, -SiVi(O-N=C(Me)(neo-C$_5$H$_{11}$)$_2$, -SiPh(O-N=C(Me)(neo-C$_5$H$_{11}$)$_2$, -Si(O-N=C(Me)(neo-C$_5$H$_{11}$)$_3$, -SiMe (OMe) (O-N=C(Me)(n-C$_3$H$_7$)), -SiVi (OMe) (O-N=C(Me)(n-C$_3$H$_7$)), -SiPh(OMe)(O -N=C(Me)(n-C$_3$H$_7$)), -SiEt(OMe)(O-N=C(Me)(n-C$_3$H$_7$)), -SiMe(OEt)(O-N=C (Me) (n-C$_3$H$_7$)), -SiVi (OEt) (O-N=C(Me)(n-C$_3$H$_7$)), -SiPh(OEt)(O-N=C(Me)(n-C$_3$H$_7$)), -SiEt(OEt) (O-N=C(Me)(n-C$_3$H$_7$)), -Si(OMe)$_2$(O-N=C (Me) (n-C$_3$H$_7$)), -Si(OEt)$_2$ (O-N=C (Me)(n-C$_3$H$_7$)), -Si (OMe) (O-N=C (Me) (n-C$_3$H$_7$))$_2$, -Si (OEt) (O-N=C (Me) (n-C$_3$H$_7$))$_2$, -SiMe(O-N=C(Me)(n-C$_3$H$_7$)$_2$, -SiEt (O-N=C (Me) (n-C$_3$H$_7$))$_2$, -SiVi (O-N=C (Me) (n-C$_3$H$_7$))$_2$, -SiPh(O-N=C(Me)(n-C$_3$H$_7$))$_2$, -Si(O-N=C(Me)(n-C$_3$H$_7$))$_3$, -SiMe (OMe) (O-N=C(Me) (iso-C$_3$H$_7$)), -SiVi (OMe) (O-N=C (Me) (iso-C$_3$H$_7$)), -SiPh(OMe)(O-N=C(Me)(iso-C$_3$H$_7$)), -SiEt(OMe) (O-N=C (Me) (iso-C$_3$H$_7$)), -SiMe(OEt) (O-N=C(Me)(iso-C$_3$H$_7$)), -sivi (OEt)(O-N=C(Me)(iso-C$_3$H$_7$)), -SiPh(OEt)(O-N=C(Me)(iso-C$_3$H$_7$)),- SiEt(OEt)(O-N=C(Me)(iso-C$_3$H$_7$)), -Si(OMe)$_2$(O-N=C(Me)(iso-C$_3$H$_7$), -Si (OEt)$_2$ (O-N=C (Me)(iso-C$_3$H$_7$)), -Si (OMe) (O-N=C (Me) (iso-C$_3$H$_7$))$_2$, -Si (OEt) (O-N=C (Me) (iso-C$_3$H$_7$))$_2$, -SiMe (O-N=C(Me) (iso-C$_3$H$_7$))$_2$, -SiEt (O-N=C(Me)(iso-C$_3$H$_7$))$_2$, -SiVi(O-N=C(Me)(iso-C$_3$H$_7$))$_2$, -SiPh(O-N=C(Me)(iso-C$_3$H$_7$))$_2$, -Si(O-N=C(Me)(iso-C$_3$H$_7$))$_3$, -Si(n-C$_8$H$_{17}$)(O-N=C(Me)(n-C$_3$H$_7$))$_2$, -Si(CH$_2$-CH(CH$_3$) -CH$_2$-C(CH$_3$)$_2$-CH$_3$)(O-N=C(Me)(n-C$_3$H$_7$))$_2$, -Si(CH$_2$-CH(CH$_2$-CH$_3$)-(CH$_2$)$_3$-CH$_3$)(O-N=C(Me)(n-C$_3$H$_7$))$_2$, -Si(n-C$_8$H$_{17}$)(OMe)(O-N=C(Me)(n-C$_3$H$_7$)), -Si(CH$_2$-CH(CH$_3$)-CH$_2$-C(CH$_3$)$_2$-CH$_3$)(OMe) (O-N=C (Me) (n-C$_3$H$_7$)), -Si (CH$_2$-CH (CH$_2$-CH$_3$) - (CH$_2$)$_3$-CH$_3$)(OMe) (O-N=C (Me)(n-C$_3$H$_7$)), -Si (n-C$_8$H$_{17}$) (OEt)(O-N=C(Me) (n-C$_3$H$_7$), -Si (CH$_2$-CH(CH$_3$)-CH$_2$-C(CH$_3$)$_2$-CH$_3$)(OEt)(O-N=C(Me) (n-C$_3$H$_7$)), -Si (CH$_2$-CH(CH$_2$-CH$_3$)-(CH$_2$)$_3$-CH$_3$)(OEt) (O-N=C (Me) (n-C$_3$H$_7$)), -Si (n-C$_8$H$_{17}$)(O-N=C(Me)(iso-C$_3$H$_7$))$_2$, -Si (CH$_2$-CH(CH$_3$)-CH$_2$-C(CH$_3$)$_2$-CH$_3$)(O-N=C(Me)(iso-C$_3$H$_7$))$_2$, -Si (CH$_2$-CH(CH$_2$-CH$_3$)-(CH$_2$)$_3$-CH$_3$)(O-N=C(Me)(iso-C$_3$H$_7$))$_2$, -Si(n-C$_8$H$_{17}$) (OMe) (O-N=C (Me) (iso-C$_3$H$_7$)), -Si(CH$_2$-CH(CH$_3$)-CH$_2$-C(CH$_3$)$_2$-CH$_3$)(OMe)(O-N=C (Me) (iso-C$_3$H$_7$)), -Si (CH$_2$-CH(CH$_2$-CH$_3$)-(CH$_2$)$_3$-CH$_3$) (OMe) (O-N=C (Me) (iso-C$_3$H$_7$)), -Si (n-C$_8$H$_{17}$)(OEt)(O-N=C(Me)(iso-C$_3$H$_7$)), -Si(CH$_2$-CH(CH$_3$)-CH$_2$-C(CH$_3$)$_2$-CH$_3$)(OEt)(O-N=C(Me)(iso-C$_3$H$_7$)), -Si (CH$_2$-CH(CH$_2$-CH$_3$)-(CH$_2$)$_3$-CH$_3$)(OEt)(O-N=C(Me)(iso-C$_3$H$_7$)), -SiMe(OMe)(O-N=C(CH$_3$)$_2$), -SiVi(OMe)(O-N=C(CH$_3$)$_2$), -SiPh (OMe) (O-N=C(CH$_3$)$_2$), -SiEt (OMe) (O-N=C (CH$_3$)$_2$), -SiMe (OEt) (O-N=C (CH$_3$)$_2$), -SiVi(OEt) (O-N=C (CH$_3$)$_2$), -SiPh(OEt)(O-N=C(CH$_3$)$_2$), -SiEt(OEt)(O-N=C(CH$_3$)$_2$), -Si(OMe)$_2$(O-N=C(CH$_3$)$_2$), -Si(OEt)$_2$(O-N=C(CH$_3$)$_2$), -Si(OMe)(O-N=C(CH$_3$)$_2$)$_2$, -Si(OEt)(O-N=C(CH$_3$)$_2$)$_2$, -SiMe(O-N=C(CH$_3$)$_2$)$_2$, -SiEt(O-N=C(CH$_3$)$_2$)$_2$, -SiVi(O-N=C(CH$_3$)$_2$)$_2$, -SiPh(O-N=C(CH$_3$)$_2$)$_2$, -Si(O-N=C(CH$_3$)$_2$)$_3$, -Si(n-C$_8$H$_{17}$)(O-N=C(CH$_3$)$_2$)$_2$, -Si(CH$_2$-CH(CH$_3$)-CH$_2$-C(CH$_3$)$_2$-CH$_3$)(O-N=C(CH$_3$)$_2$)$_2$, -Si(CH$_2$-CH(CH$_2$-CH$_3$)-(CH$_2$)$_3$-CH$_3$)(O-N=C(CH$_3$)$_2$)$_2$, -Si(n-C$_8$H$_{17}$)(OMe) (O-N=C(CH$_3$)$_2$), -Si (CH$_2$-CH(CH$_3$)-CH$_2$-C(CH$_3$)$_2$-CH$_3$)(OMe) (O-N=C(CH$_3$)$_2$), -Si(CH$_2$-CH(CH$_2$-CH$_3$)-(CH$_2$)$_3$-CH$_3$)(OMe)(O-N=C(CH$_3$)$_2$), -Si(n-C$_8$H$_{17}$)(OEt)(O-N=C(CH$_3$)$_2$), -Si(CH$_2$-CH(CH$_3$)-CH$_2$-C(CH$_3$)$_2$-CH$_3$) (OEt)(O-N=C(CH$_3$)$_2$), -Si (CH$_2$-CH(CH$_2$-CH$_3$)-(CH$_2$)$_3$-CH$_3$)(OEt)(O-N=C(CH$_3$)$_2$);

Lactylsilylendgruppen, z.B. -SiMe(O-CH(CH$_3$)-CO(OCH$_3$))$_2$, -SiVi(O-CH(CH$_3$)-CO(OCH$_3$))$_2$, -SiPh(O-CH(CH$_3$)-CO(OCH$_3$))$_2$, -SiMe(O-CH(CH$_3$)-CO(OEt))$_2$, -SiVi(O-CH(CH$_3$)-CO(OEt))$_2$, -SiPh(O-CH(CH$_3$))-CO(OEt)$_2$, -Si(O-CH(CH$_3$)-CO(OCH$_3$))$_3$, -Si(O-CH(CH$_3$)-CO(OEt))$_3$, -Si(OMe)(O-CH(CH$_3$)-CO(OCH$_3$))$_2$, -Si(OMe)(O-CH(CH$_3$)-CO(OEt))$_2$, -Si(OMe)$_2$(O-CH(CH$_3$)-CO(OCH$_3$)), -Si(OMe)$_2$(O-CH(CH$_3$)-CO(OEt), -Si(OEt)(O-CH(CH$_3$)-CO(OCH$_3$))$_2$, -Si(OEt)(O-CH(CH$_3$)-CO(OEt))$_2$, -Si(OEt)$_2$(O-CH(CH$_3$)-CO(OCH$_3$)), -Si(OEt)$_2$(O-CH(CH$_3$)-CO (OEt)); -Si(n-C$_8$H$_{17}$)(O-CH(CH$_3$)-CO(OCH$_3$))$_2$, -Si(n-C$_8$H$_{17}$)(O-CH(CH$_3$)-CO(OEt))$_2$, -Si(CH$_2$-CH(CH$_3$)-CH$_2$-C(CH))$_2$-CH$_3$)(O-CH(CH$_3$)-CO(OCH$_3$))$_2$, -Si(CH$_2$-CH(CH$_3$)CH$_2$-C(CH$_3$)$_2$-CH$_3$)(O-CH(CH$_3$)-CO(OEt))$_2$, -Si(CH$_2$-CH(CH$_2$-CH$_3$)-(CH$_2$)$_3$-CH$_3$)(O-CH(CH$_3$)-CO(OCH$_3$))$_2$, -Si(CH$_2$-CH(CH$_2$-CH$_3$)-(CH$_2$)$_3$-CH$_3$)(O-CH(CH$_3$)-CO(OEt))$_2$, -Si(n-C$_8$H$_{17}$) (OMe) (O-CH(CH$_3$)-CO(OCH$_3$)), -Si (n-C$_8$H$_{17}$) (OMe)(O-CH(CH$_3$)-CO(OEt)), -Si (CH$_2$-CH(CH$_3$)-CH$_2$-C(CH$_3$)$_2$-CH$_3$)(OMe) (O-CH(CH$_3$)-CO(OCH$_3$)), -Si(CH$_2$-CH(CH$_3$)CH$_2$-C(CH))$_2$-CH$_3$)(OMe)(O-CH(CH$_3$)-CO(OEt)), -Si(CH$_2$-CH(CH$_2$-CH$_3$)-(CH$_2$)$_3$-CH$_3$)(OMe)(O-CH(CH$_3$)-CO(OCH$_3$)), -Si(CH$_2$-CH(CH$_2$-CH$_3$)-(CH$_2$)$_3$-CH$_3$)(OMe)(O-CH(CH$_3$)-CO(OEt)); und weitere Beispiele für Endgruppen der Formel -SiR$_f$Y$_{3-f}$ mit Y=OH, z.B. -SiMe$_2$OH, -SiMeViOH, -SiVi$_2$OH, -SiEt$_2$OH, -SiEtMeOH, -SiEtViOH, -SiMePhOH, -SiEtPhOH, -SiPh$_2$OH, -SiPhViOH; wobei Me Methylrest, Et Ethylrest, Vi Vinylrest und Ph Phenylrest bedeutet.

Wenngleich in Formel (II) nicht dargestellt, können die erfindungsgemäß eingesetzten Organosiliciumverbindungen (A) herstellungsbedingt bis zu 0,1% aller Einheiten im Molekül Verzweigungen aufweisen, wie etwa MeSiO$_{3/2}$-oder SiO$_{4/2}$-Einheiten.

Die erfindungsgemäß eingesetzten Organosiliciumverbindungen (A) haben eine dynamische Viskosität von bevorzugt 100 bis 10$^6$ mPa·s, besonders bevorzugt von 10$^3$ bis 350 000 mPa·s, jeweils bei 25°C.

Bei den Organosiliciumverbindungen (A) handelt es sich um handelsübliche Produkte bzw. können sie nach in der Siliciumchemie gängigen Methoden hergestellt werden.

Die erfindungsgemäß eingesetzte Komponente (B) weist eine spezifische Oberfläche nach BET bevorzugt von 30 bis 110 m$^2$/g, besonders bevorzugt von 40 bis 75 m$^2$/g, auf.

Bei dem erfindungsgemäß eingesetzten Siliciumdioxid (B) handelt es sich um hochdisperses Siliciumdioxid, bevorzugt um pyrogen erzeugtes, hochdisperses Siliciumdioxid.

Beispiele für Komponente (B) sind die Produkte HDK® D05 und HDK® C10 erhältlich bei der Firma Wacker Chemie AG, D-München sowie die von der Firma Evonik Industries AG, D-Hanau-Wolfgang, erhältlichen Produkte Aerosil® OX 50 und Aerosil® 90, wobei der Einsatz der Produkte HDK® D05, Aerosil® OX 50 oder Aerosil® 90 bevorzugt ist.

Chemisch gesehen besteht pyrogen erzeugtes Siliciumdioxid bevorzugt aus hochreinem amorphen Siliciumdioxid und hat das Aussehen von lockerem weißen Pulver. Es ist aus SiO$_{4/2}$-Tetraedern aufgebaut. Diese Tetraeder sind durch Siloxanbrücken (Si-O-Si-Bindungen) miteinander verbunden. Bevorzugt trägt durchschnittlich jedes zweite Si-Atom an der Oberfläche eine Hydroxygruppe und bildet damit eine Silanolgruppe aus.

Pyrogen erzeugtes Siliciumdioxid ist bevorzugt hydrophil und hat typischerweise durchschnittlich vorzugsweise 1,5 bis 2 Silanolgruppen pro 1 nm$^2$, wird von Wasser benetzt und kann in Wasser dispergiert werden.

Das erfindungsgemäß eingesetzte Siliciumdioxid (B) kann hydrophobiert sein, was jedoch nicht bevorzugt ist, beispielsweise durch die Behandlung mit Organosilanen bzw. -siloxanen oder mit Stearinsäure oder durch Veretherung von Hydroxylgruppen zu Alkoxygruppen.

Besonders bevorzugt handelt es sich bei Siliciumdioxid (B) um hydrophiles, pyrogen erzeugtes, hochdisperses Siliciumdioxid, insbesondere um hydrophiles, pyrogen erzeugtes, hochdisperses, Siliciumdioxid, dessen Oberfläche nicht mit chemischen Substanzen hydrophobiert wurde.

Möglich, aber nicht bevorzugt, ist der Einsatz von nass gefälltem Siliciumdioxid als Komponente (B), da diese in der Regel einen hohen Feuchtegehalt aufweisen.

Bei dem erfindungsgemäß eingesetzten Siliciumdioxid (B) handelt es sich bevorzugt um pyrogen erzeugtes hochdisperses Siliciumdioxid mit einem Kohlenstoffgehalt von weniger als 2,0 Gewichts-%, besonders bevorzugt weniger als 1,0 Gewichts-%. Insbesondere enthält das pyrogen erzeugte hochdisperse Siliciumdioxid (B) keinen Kohlenstoff.

Das erfindungsgemäß eingesetzte Siliciumdioxid (B) weist eine relative Verdickungswirkung von bevorzugt 1,4 bis 6,0, besonders bevorzugt von 1,4 bis 4,0, insbesondere von 1,4 bis 3,0, auf.

Weiterhin weist die erfindungsgemäß eingesetzte Komponente (B) einen Trocknungsverlust nach DIN EN ISO 787-2 (Erwärmung auf 105°C bei Umgebungsdruck bis zur Gewichtskonstanz) von bevorzugt maximal 10,0 Gewichts-%, besonders bevorzugt maximal 5,0 Gewichts-%, insbesondere von maximal 1,0 Gewichts-%, auf.

Die erfindungsgemäß eingesetzte Komponente (B) weist einen pH-Wert nach DIN EN ISO 787-9 (in 4%iger wässriger Dispersion) von bevorzugt 3,0 bis 10,0, besonders bevorzugt von 3,5 bis 8,0, insbesondere von 4,0 bis 6,0, auf.

Bei der erfindungsgemäß eingesetzten Komponente (B) handelt es sich um handelsübliche Produkte bzw. kann diese nach beliebigen und bisher bekannten Verfahren hergestellt werden, beispielsweise durch Hochtemperaturhydrolyse von Halogensiliciumverbindungen in einer Wasserstoff-Sauerstoff-Flamme, wie z.B. beschrieben in Ullmanns Enzyklopädie der technischen Chemie, Band 21, Seite 462 (1982).

Die erfindungsgemäßen Massen enthalten Komponente (B) in Mengen von vorzugsweise 10 bis 100 Gewichtsteilen, besonders bevorzugt 15 bis 80 Gewichtsteilen, insbesondere 20 bis 70 Gewichtsteilen, jeweils bezogen auf 100 Gewichtsteile Organosiliciumverbindung (A).

Die erfindungsgemäß eingesetzte Kohlenwasserstoffkomponente (C) setzt sich im Wesentlichen aus linearen Kohlenwasserstoffen und/oder verzweigten Kohlenwasserstoffen und/oder cyclischen Kohlenwasserstoffen zusammen.

Bevorzugt handelt es sich bei Komponente (C) um ein Mineralölprodukt.

Vorzugsweise besteht die erfindungsgemäß eingesetzte Kohlenwasserstoffkomponente (C) aus einer oder mehreren Arten von Kohlenwasserstoffen sowie gegebenenfalls Verunreinigungen, wie z.B. mit S, N und/oder O substituierte Kohlenwasserstoffe.

Falls die erfindungsgemäß eingesetzte Kohlenwasserstoffkomponente (C) Verunreinigungen enthält, handelt es sich um Mengen von bevorzugt maximal 10000 mg/kg, besonders bevorzugt maximal 1000 mg/kg, insbesondere maximal 100 mg/kg.

Die in Komponente (C) enthaltenen Kohlenwasserstoffe bestehen im Wesentlichen aus Wasserstoffatomen, paraffinischen und naphthenischen Kohlenstoffatomen.

Unter naphthenischen Kohlenstoffatomen ($C_N$) sollen im Sinne der Erfindung solche Kohlenstoffatome verstanden werden, die sich in ringförmigen Strukturteilen von gesättigten Alkanen befinden.

Unter paraffinischen Kohlenstoffatomen ($C_P$) sollen im Sinne der Erfindung solche Kohlenstoffatome verstanden werden, die sich in acyclischen Strukturteilen von gesättigten Alkanen befinden.

Unter aromatischen Kohlenstoffatomen ($C_A$) sollen im Sinne der Erfindung solche Kohlenstoffatome verstanden werden, die sich in aromatischen Strukturteilen befinden und Bestandteil eines konjugierten Doppelbindungssystem sind.

In der erfindungsgemäß eingesetzten Komponente (C) sind weniger als 0,1% aller Kohlenstoffatome aromatische Kohlenstoffatome. Komponente (C) enthält bevorzugt 60 bis 80% paraffinische Kohlenstoffatome, 20 bis 40% naphthenische Kohlenstoffatome und weniger als 0,1% aromatische Kohlenstoffatome.

Die erfindungsgemäß eingesetzte Komponente (C) ist dadurch charakterisiert, dass sie einen Siedebeginn oberhalb 150°C, bevorzugt oberhalb 200°C, besonders bevorzugt oberhalb 220°C, hat, jeweils bei einem Druck von 1013 hPa.

Die erfindungsgemäß eingesetzte Komponente (C) ist ferner dadurch charakterisiert, dass sie einen Siedeendpunkt von unterhalb 350°C, bevorzugt unterhalb 340°C, besonders bevorzugt unterhalb 330°C, hat, jeweils bei einem Druck von 1013 hPa.

Die erfindungsgemäß eingesetzte Komponente (C) weist eine kinematische Viskosität gemessen bei 40°C von bevorzugt 2,0 bis 5,5 mm$^2$/s, besonders bevorzugt von 2,5 bis 5,0 mm$^2$/s, auf.

Die erfindungsgemäß eingesetzte Komponente (C) weist eine Viskositäts-Dichte-Konstante (VDK) von bevorzugt größer 0,770 und kleiner oder gleich 0,820 auf.

Die erfindungsgemäß eingesetzte Komponente (C) hat einen Pourpoint gemessen von bevorzugt kleiner -7°C, besonders bevorzugt von kleiner -9°C.

Komponente (C) sind handelsübliche Produkte bzw. durch chemisch/physikalische Methoden herstellbar.

Die erfindungsgemäßen Massen enthalten Komponente (C) in Mengen von vorzugsweise 20 bis 150 Gewichtsteilen, besonders bevorzugt 30 bis 120 Gewichtsteilen, insbesondere 40 bis 90 Gewichtsteilen, jeweils bezogen auf 100 Gewichtsteile Organosiliciumverbindung (A).

Zusätzlich zu den oben beschriebenen Komponenten (A), (B) und (C) können die erfindungsgemäßen Massen nun alle weiteren Stoffe enthalten, die auch bisher in durch Kondensationsreaktion vernetzbaren Massen eingesetzt worden sind, wie z.B. Härtungsbeschleuniger (D), Vernetzer (E), Füllstoffe (F) und Additive (G), die jeweils verschieden sind zu Komponenten (A), (B) und (C) sind.

Als Härtungsbeschleuniger (D) können alle Härtungsbeschleuniger, die auch bisher in durch Kondensationsreaktion vernetzbare Massen eingesetzt werden, verwendet werden. Beispiele für Härtungsbeschleuniger (D) sind Titanverbindungen, wie beispielsweise Tetrabutyl- oder Tetraisopropyltitanat, oder Titanchelate, wie Bis(ethylacetoacetato)diisobutoxytitanium, oder organische Zinnverbindungen, wie Di-n-butylzinndilaurat und Di-n-butylzinndiacetat, Di-n-butylzinnoxid, Dimethylzinndiacetat, Dimethylzinndilaurat, Dimethylzinndineodecanoate, Dimethylzinnoxid, Di-n-octylzinndiacetat, Di-n-octylzinndilaurat, Di-n-octylzinnoxid sowie Umsetzungsprodukte dieser Verbindungen mit Alkoxysilanen, wie Tetraethoxysilan, Di-n-butylzinndiacetat, das Umsetzungsprodukt von Di-n-butylzinndiacetat mit Tetraethoxysilan, wobei Di-n-octylzinndiacetat, Di-n-octylzinndilaurat, Umsetzungsprodukte des Di-n-octylzinnoxids mit Tetraethoxysilan, Tetrabutyltitanat, Tetraisopropyltitanat oder Bis(ethylacetoacetato)diisobutoxytitanium bevorzugt sind.

Falls die erfindungsgemäßen Massen Härtungsbeschleuniger (D) enthalten, handelt es sich um Mengen von vorzugsweise 0,1 bis 20 Gewichtsteilen, besonders bevorzugt 1 bis 10 Gewichtteilen, jeweils bezogen auf 100 Gewichtsteile Bestandteil (A). Die erfindungsgemäßen Massen enthalten bevorzugt Härtungsbeschleuniger (D).

Bei den in den erfindungsgemäßen Massen gegebenenfalls eingesetzten Vernetzern (E) kann es sich um beliebige, bisher bekannte Vernetzer mit mindestens drei hydrolysefähigen Resten handeln, wie beispielsweise Silane oder Siloxane mit mindestens drei Organyloxygruppen.

Bei den in den erfindungsgemäßen Massen gegebenenfalls eingesetzten Vernetzern (E) handelt es sich vorzugsweise um Organosiliciumverbindungen der Formel

$$Z_cSiR^2_{(4-c)} \qquad (III),$$

wobei

$R^2$ gleich oder verschieden sein kann und einwertige, gegebenenfalls substituierte Kohlenwasserstoffreste, die durch Sauerstoffatome unterbrochen sein können, bedeutet,

Z gleich oder verschieden sein kann und hydrolysierbaren Rest bedeutet und

c 3 oder 4 ist,

sowie deren Teilhydrolysate.

Beispiele für Rest $R^2$ sind die für Rest R oben angegebenen Beispiele.

Beispiele für Rest Z sind die für Rest Y oben angegebenen Reste für hydrolysierbare Gruppen.

Bevorzugte und besonders bevorzugte Reste Z sind die für Y oben genannten bevorzugten und besonders bevorzugten Reste für hydrolysierbare Gruppen.

Insbesondere handelt es sich bei Rest Z um Methoxy-, Ethoxy-, Dimethylketoximo-, Methyl-n-propylketoximo-, Methyl-iso-propylketoximo- oder Acetoxyrest.

Falls in den erfindungsgemäßen Massen Organosiliciumverbindungen (A) enthaltend Einheiten der Formel (I) mit Y gleich hydrolysierbaren Resten sowie Vernetzer (E) der Formel (III) eingesetzt werden, haben Reste Y bevorzugt die gleiche Bedeutung wie Rest Z.

Obwohl durch Formel (III) nicht dargestellt, können Vernetzer (E) einen Anteil von Si-gebundenen Hydroxylgruppen von bevorzugt bis zu maximal 5% aller Si-gebundenen Reste haben.

Bevorzugt handelt es sich bei den in den erfindungsgemäßen Massen gegebenenfalls eingesetzten Vernetzern (E) um Tetramethoxysilan, Tetraethoxysilan, Tetrapropoxysilan, Tetrabutoxysilan, Methyltrimethoxysilan, Methyltriethoxysilan, Vinyltrimethoxysilan, Vinyltriethoxysilan, Phenyltrimethoxysilan, Phenyltriethoxysilan, N-(Trimethoxysilylmethyl)-O-methylcarbamat, (N-Cyclohexylaminomethyl)triethoxysilan, 1,2-Bis(trimethoxysilyl)-ethan, 1,2-Bis(triethoxysilyl)ethan, 3-Aminopropyltriethoxysilan, 3-Aminopropyltrimethoxysilan, N-(2-Aminoethyl)-3-aminopropyltriethoxysilan, N-(2-Aminoethyl)-3-aminopropyltrimethoxysilan, 3-Aminopropylmethyldiethoxysilan, 3-Aminopropylmethyldimethoxysilan, N-(2-Aminoethyl)-3-aminopropylmethyldiethoxysilan, N-(2-Aminoethyl)-3-aminopropylmethyldimethoxysilan, 3-Glycidoxypropyltrimethoxysilan, 3-Glycidoxypropyltriethoxysilan, 3-Glycidoxypropyldimethoxymethylsilan und 3-Glycidoxypropyldiethoxymethylsilan, 2-(3,4-Epoxycyclohexyl)ethyltriethoxysilan, 3-Ureidopropyltrimethoxysilan, 3-Ureidopropyltriethoxysilan, 1,3,5-Tris[3-(trimethoxysilyl)propyl]-1,3,5-triazine-2,4,6-(1H,3H,5H)-trion, 3-Mercaptopropyltriethoxysilan, Methyltris-(methylethylketoximo)silan, Methyltris(dimethylketoximo)silan, Ethyltris(dimethylketoximo)silan, Methyltris(methyl-n-propylketoximo)silan, Methyltris(methyl-iso-propylketoximo)silan, Vinyltris(methylethylketoximo)silan, Vinyltris(dimethylketoximo)-silan, Vinyltris(methyl-n-propylketoximo)silan, Vinyltris(methyl-iso-propylketoximo)silan, Vinylbis(dimethylketoximo)methoxysilan, Vinylbis(methylethylketoximo)methoxysilan, Tetrakis-(methylethylketoximo)silan, Tetrakis(dimethylketoximo)silan, Tetrakis(methyl-n-propylketoximo)silan, Tetrakis(methyl-isopropylketoximo)silan, Methyltriacetoxysilan, Ethyltriacetoxysilan, Vinyltriacetoxysilan, Di(tert.-butoxy)diacetoxysilan, N,N',N''-Tricyclohexyl-1-methylsilantriamin, 1-Methyl-N,N',N''-tris(1-methylpropyl)silantriamin, (2,3,5,6-Tetrahydro-1,4-oxazin-4-yl)methyl-trimethoxysilan, (2,3,5,6-Tetrahydro-1,4-oxazin-4-yl)methyl-triethoxysilan, (N,N-Di-n-butylamino)methyltrimethoxysilan, (N,N-Di-n-butylamino)methyl-triethoxysilan, N-Cyclohexylaminomethyl-trimethoxysilan, N-Cyclohexylaminomethyltriethoxysilan, n-butylaminomethyl-trimethoxysilan, n-butylaminomethyl-triethoxysilan, (2,3,4,5,6-Hexahydropyridin-1-yl)methyl-trimethoxysilan, (2,3,4,5,6)-Hexahydropyridin-1-yl)methyltriethoxysilan, (2,3,4,5-Tetrahydropyrrol-1-yl)methyl-trimethoxysilan, (2,3,4,5-Tetrahydropyrrol-1-yl)methyl-triethoxysilan; sowie um Teilhydrolysate der genannten Organosiliciumverbindungen, wie z.B. Hexaethoxydisiloxan.

Besonders bevorzugt handelt es sich bei den in den erfindungsgemäßen Massen gegebenenfalls eingesetzten Vernetzern (E) um Tetramethoxysilan, Tetraethoxysilan, Methyltrimethoxysilan, Methyltriethoxysilan, Vinyltrimethoxysilan, Vinyltriethoxysilan, Methyltris(methylethylketoximo)silan, Vinyltris(methylethylketoximo)silan, Methyltris(dimethylketoximo)silan, Ethyltris(dimethylketoximo)silan, Vinyltris(dimethylketoximo)silan, Methyltriacetoxysilan, Ethyltriacetoxysilan, Vinyltriacetoxysilan, (2,3,5,6-Tetrahydro-1,4-oxazin-4-yl)methyl-trimethoxysilan und (2,3,5,6-Tetrahydro-1,4-oxazin-4-yl)methyl-triethoxysilan, 3-Aminopropyltriethoxysilan, 3-Aminopropyltrimethoxysilan, N-(2-Aminoethyl)-3-aminopropyltriethoxysilan, N-(2-Aminoethyl)-3-aminopropyltrimethoxysilan, 3-Aminopropylmethyldiethoxysilan, 3-Aminopropylmethyldimethoxysilan, N-(2-Aminoethyl)-3-aminopropylmethyldiethoxysilan, N-(2-Aminoethyl)-3-aminopropylmethyldimethoxysilan, 3-Glycidoxypropyltrimethoxysilan, 3-Glycidoxypropyltriethoxysilan, 3-Glycidoxypropyldimethoxymethylsilan und 3-Glycidoxypropyldiethoxymethylsilan oder 1,3,5-Tris[3-(trimethoxysilyl)propyl]-1,3,5-triazine-2,4,6(1H,3H,5H)-trion.

Handelt es sich bei den in den erfindungsgemäßen Massen gegebenenfalls eingesetzten Vernetzern (E) um Teilhydrolysate der oben genannten Silane, so sind solche mit bis zu 10 Siliciumatomen bevorzugt.

Die in den erfindungsgemäßen Massen gegebenenfalls eingesetzten Vernetzer (E) sind handelsübliche Produkte bzw. können nach in der Siliciumchemie bekannten Verfahren hergestellt werden.

Falls die erfindungsgemäßen Massen Vernetzer (E) enthalten, handelt es sich um Mengen von vorzugsweise 0,1 bis 40 Gewichtsteilen, besonders bevorzugt 0,1 bis 30 Gewichtsteilen, insbesondere 0,1 bis 20 Gewichtsteilen, jeweils bezogen auf 100 Gewichtsteile Organosiliciumverbindung (A). Die erfindungsgemäßen Massen enthalten bevorzugt Vernetzer (E).

Mögliche weitere Füllstoffe (F), die erfindungsgemäß eingesetzt werden können und verschieden sind zu (B), sind nicht verstärkende Füllstoffe (F), also Füllstoffe mit einer BET-Oberfläche von bis zu 20 $m^2/g$, wie Quarz, Diatomeenerde, Calciumsilikat, Zirkoniumsilikat, Zeolithe, Metalloxidpulver, wie Aluminium-, Titan-, Eisen- oder Zinkoxide bzw. deren Mischoxide, Bariumsulfat, Calciumcarbonat, Gips, Siliciumnitrid, Siliciumcarbid, Bornitrid, Glas- und Kunststoffpulver, wie Polyacrylnitrilpulver; andere verstärkende Füllstoffe verschieden von (B), also Füllstoffe mit einer BET-Oberfläche von mehr als 20 $m^2/g$, wie gefällte Kreide und Ruß, wie Furnace- und Acetylenruß; faserförmige Füllstoffe, wie Asbest sowie Kunststofffasern.

Falls die erfindungsgemäßen Massen Füllstoffe (F) enthalten, handelt es sich um Mengen von vorzugsweise 10 bis 150 Gewichtsteilen, besonders bevorzugt 10 bis 130 Gewichtsteilen, insbesondere 10 bis 100 Gewichtsteilen, jeweils bezogen auf 100 Gewichtsteile Organosiliciumverbindung (A). Die erfindungsgemäßen Massen enthalten bevorzugt keinen Füllstoff (F).

Beispiele für Additive (G) sind Pigmente, Farbstoffe, Riechstoffe, Oxidationsinhibitoren, Mittel zur Beeinflussung der elektrischen Eigenschaften, wie leitfähiger Ruß, flammabweisend machende Mittel, Lichtschutzmittel, Biozide wie Fungizide, Bactericide und Acarizide, zellenerzeugende Mittel, z.B. Azodicarbonamid, Hitzestabilisatoren, Scavenger, wie Si-N enthaltende Silazane oder Silylamide, z.B. N,N'-Bis-trimethylsilyl-harnstoff oder Hexamethyldisilazan, Cokatalysatoren, wie Lewis- und Brönstedsäuren, z.B. Sulfonsäuren, Phosphorsäuren, Phosphorsäureester, Phosphonsäuren und Phosphonsäureester, Thixotropiermittel, wie beispielsweise einseitig oder beidseitig OH-endterminiertes Polyethylenglykol oder Rizinusöl, Mittel zur weiteren Regulierung des Moduls wie Polydimethylsiloxane mit einer OH-Endgruppe, sowie beliebige Siloxane, die unterschiedlich zu Komponente (A) sind.

Falls die erfindungsgemäßen Massen Additive (G) enthalten, handelt es sich um Mengen von vorzugsweise 0,1 bis 20 Gewichtsteilen, besonders bevorzugt 0,1 bis 15 Gewichtsteilen, insbesondere 0,1 bis 10 Gewichtsteilen, jeweils bezogen auf 100 Gewichtsteile Organosiliciumverbindung (A).

Bei den einzelnen Bestandteilen der erfindungsgemäßen Massen kann es sich jeweils um eine Art eines solchen Bestandteils wie auch um ein Gemisch aus mindestens zwei verschiedenen Arten derartiger Bestandteile handeln.

Bevorzugt handelt es sich bei den erfindungsgemäßen Massen um solche, die

(A) mindestens eine Organosiliciumverbindung der Formel (II),
(B) mindestens ein hochdisperses Siliciumdioxid,
(C) mindestens eine Kohlenwasserstoffkomponente,
(E) mindestens einen Vernetzer der Formel (III), gegebenenfalls
(D) Härtungsbeschleuniger,
gegebenenfalls
(F) Füllstoffe und
gegebenenfalls
(G) Additive
enthalten.

Besonders bevorzugt handelt es sich bei den erfindungsgemäßen Massen um solche, die

(A) mindestens eine Organosiliciumverbindung der Formel (II),
(B) mindestens ein hochdisperses Siliciumdioxid,
(C) mindestens eine Kohlenwasserstoffkomponente,
(E) mindestens einen Vernetzer der Formel (III),
(D) mindestens einen Härtungsbeschleuniger
und gegebenenfalls
(G) Additive

enthalten.

Insbesondere handelt es sich bei den erfindungsgemäßen Massen um solche, die

(A) mindestens eine Organosiliciumverbindung der Formel (II),
(B) mindestens ein hochdisperses Siliciumdioxid,
(C) mindestens eine Kohlenwasserstoffkomponente mit einer kinematischen Viskosität von 2,0 bis 5,5 $mm^2/s$ bei 40°C, einer Viskositäts-Dichte-Konstante von gleich oder kleiner 0,82 und enthaltend 20-40% naphthenische Kohlenstoffatome und 60-80% paraffinische Kohlenstoffatome und weniger als 0,1% aromatische Kohlenstoffatome,
(E) mindestens einen Vernetzer der Formel (III),
(D) mindestens einen Härtungsbeschleuniger
und gegebenenfalls
(G) Additive
enthalten.

Die erfindungsgemäßen Massen enthalten außer die Komponenten (A) bis (G) bevorzugt keine weiteren Bestandteile.

Bei den erfindungsgemäßen Massen handelt es sich bevorzugt um zähflüssig bis pastöse Massen.

Die erfindungsgemäßen Massen haben eine Extrusionsrate von bevorzugt mehr als 40 g/min, besonders bevorzugt von mehr als 45 g/min.

Zur Bereitung der erfindungsgemäßen Massen können alle Bestandteile in beliebiger Reihenfolge miteinander vermischt werden. Dieses Vermischen kann bei Raumtemperatur und dem Druck der umgebenden Atmosphäre, also etwa 900 bis 1100 hPa, erfolgen. Falls erwünscht, kann dieses Vermischen aber auch bei höheren Temperaturen erfolgen, z.B. bei Temperaturen im Bereich von 35 bis 135°C. Weiterhin ist es möglich, zeitweilig oder ständig unter vermindertem Druck zu mischen, wie z.B. bei 30 bis 500 hPa Absolutdruck, um flüchtige Verbindungen oder Luft zu entfernen.

Die Mischungsherstellung kann kontinuierlich oder diskontinuierlich nach bekannten Verfahren und unter Verwendung von bekannten Apparaturen erfolgen.

Das erfindungsgemäße Vermischen findet bevorzugt unter weitestgehendem Ausschluss von Wasser statt, d.h. der Einsatz von Rohstoffen, welche einen Wassergehalt von vorzugsweise weniger als 10000 mg/kg, bevorzugt von weniger als 5000 mg/kg, insbesondere von weniger als 1000 mg/kg aufweisen. Während des Mischprozesses wird bevorzugt mit trockener Luft oder Schutzgas wie Stickstoff beschleiert, wobei das jeweilige Gas einen Feuchtegehalt von vorzugsweise weniger als 10000 mg/kg, bevorzugt von weniger als 1000 mg/kg, insbesondere von weniger als 500 mg/kg, aufweist. Die Pasten werden nach dem Herstellen in handelsübliche feuchtigkeitsdichte Gebinde gefüllt, wie Kartuschen, Schlauchbeutel, Eimer und Fässer.

Ein weiterer Gegenstand der Erfindung ist ein Verfahren zur Herstellung der erfindungsgemäßen Massen durch Vermischen der einzelnen Bestandteile.

Für die Vernetzung der erfindungsgemäßen Massen reicht der übliche Wassergehalt der Luft aus. Die Vernetzung der erfindungsgemäßen Massen erfolgt vorzugsweise bei Raumtemperatur. Sie kann, falls erwünscht, auch bei höheren oder niedrigeren Temperaturen als Raumtemperatur, z.B. bei -5° bis 15°C oder bei 30°C bis 50°C und/oder mittels den normalen Wassergehalt der Luft übersteigenden Konzentrationen von Wasser durchgeführt werden.

Vorzugsweise wird die Vernetzung bei einem Druck von 100 bis 1100 hPa, insbesondere beim Druck der umgebenden Atmosphäre, also etwa 900 bis 1100 hPa, durchgeführt.

Ein weiterer Gegenstand der vorliegenden Erfindung sind Formkörper, hergestellt durch Vernetzung der erfindungsgemäßen Massen.

Die erfindungsgemäßen Formkörper haben eine Weiterreißfestigkeit von bevorzugt mindestens 10 kN/m.

Die erfindungsgemäßen Massen können für alle Verwendungszwecke eingesetzt werden, für die unter Ausschluss von Wasser lagerfähige, bei Zutritt von Wasser bei Raumtemperatur zu Harzen oder Elastomeren vernetzende Massen eingesetzt werden können.

Die erfindungsgemäßen Massen eignen sich somit ausgezeichnet beispielsweise als Abdichtmassen für Fugen, einschließlich senkrecht verlaufender Fugen, und ähnlichen Leerräumen von z.B. 10 bis 40 mm lichter Weite, z.B. von Gebäuden, Land-, Wasser- und Luftfahrzeugen, oder als Klebstoffe oder Verkittungsmassen, z.B. im Fensterbau oder bei der Herstellung von Vitrinen, sowie beispielsweise zur Herstellung von Schutzüberzügen, einschließlich solcher für der ständigen Einwirkung von Süß- oder Meerwasser ausgesetzte Oberflächen oder das Gleiten verhindernde Überzüge oder von gummielastischen Formkörpern.

Die erfindungsgemäßen Massen haben den Vorteil, dass sie leicht herzustellen sind und sich durch eine sehr hohe Lagerstabilität auszeichnen.

Des Weiteren haben die erfindungsgemäßen Massen den Vorteil, dass sie eine sehr gute Handhabbarkeit bei der Anwendung zeigen und bei einer Vielzahl von Applikation ausgezeichnete Verarbeitungseigenschaften aufweisen.

Die erfindungsgemäßen vernetzbaren Massen haben den Vorteil, dass die Pasten im unvernetzten Zustand eine gute Auspressbarkeit aus der Kartusche, die sogenannte Extrusionsrate, aufweisen.

Die erfindungsgemäßen vernetzbaren Massen haben den Vorteil, dass sie auf einer Vielzahl von Untergründen sehr gut haften.

Die erfindungsgemäßen Massen haben den Vorteil, dass sie sowohl im unvulkanisierten als auch vulkanisierten Zustand eine gute Verträglichkeit der Kohlenwasserstoffkomponente (C) mit der Siloxanmatrix aufweisen, sodass auch bei tiefen Temperaturen, wie z.B. um 0°C oder -20°C, kein sichtbares Ausölen auftritt.

Ferner haben die erfindungsgemäßen Massen den Vorteil, dass sie im ausgehärteten Zustand hohe Weiterreißfestigkeiten der ausgehärteten Vulkanisate erreichen.

Die erfindungsgemäßen vernetzbaren Massen haben den Vorteil, dass sie hinsichtlich der eingesetzten Stoffe sehr wirtschaftlich sind.

In den nachstehend beschriebenen Beispielen beziehen sich alle Angaben der dynamischen Viskositäten, sofern nicht anders angegeben, auf eine Temperatur von 25°C und die Angaben der kinematischen Viskositäten, sofern nicht anders angegeben, auf eine Temperatur von 40°C. Sofern nicht anders angegeben, werden die nachstehenden Beispiele bei einem Druck der umgebenden Atmosphäre, also etwa bei 1013 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, durchgeführt. In den folgenden Beispielen wurden Rohstoffe eingesetzt, die einen Wassergehalt von weniger als 5000 mg/kg aufwiesen, und die Mischungen wurden während der Herstellung mit trockener Luft (Feuchtegehalt maximal 0,12 $g/m^3$) beschleiert.

In den nachstehenden Beschreibungen der Kohlenwasserstoffgemische (KWG-1 bis KWG-7) wurde der Gehalt an paraffinischen ($C_P$) und naphtenischen ($C_N$) Kohlenstoffatomen aus dem Nomogramm in ASTM D 2140-08 (Seite 2, Fig. 1) bestimmt. Die Anteile an den einzelnen Kohlenstoffatomsorten wurden auf ganze Zahlen gerundet entsprechend DIN 1333 Abschnitt 4.5 von 1992. Deshalb ist der für die Ermittlung der Kohlenstoffverteilung anzusetzende Gehalt an aromatischen ($C_A$) Kohlenstoffatomen stets 0%. Damit ergibt sich aus dem Schnittpunkt der gegebenenfalls interpolierten VDK-Linie mit der Grundlinie, d.h. bei 0% aromatischen Kohlenstoffatomen ($C_A$), die Verteilung der paraffinischen ($C_P$) und naphthenischen ($C_N$) Kohlenstoffatome.

KWG-1: Kohlenwasserstoffkomponente mit einem Siedebeginn von 278°C, einem Siedeendpunkt von 322°C, jeweils bei einem Druck von 1013 hPa, einer VDK von 0,795, einer kinematischen Viskosität von 4,1 $mm^2/s$, gemessen bei 40°C, einem Pourpoint von -19°C, einem Gehalt an naphthenischen Kohlenstoffatomen von 30% $C_N$ und einem Gehalt an paraffinischen Kohlenstoffatomen von 70% $C_P$.

KWG-2: Kohlenwasserstoffkomponente mit einem Siedebeginn von 236°C, einem Siedeendpunkt von 262°C, jeweils bei einem Druck von 1013 hPa, einer VDK von 0,811, einer kinematischen Viskosität von 2,4 $mm^2/s$, gemessen bei 40°C, einem Pourpoint von -50°C, einem Gehalt an naphthenischen Kohlenstoffatomen von 36% $C_N$ und einem Gehalt an paraffinischen Kohlenstoffatomen von 64% $C_P$.

KWG-3: Kohlenwasserstoffkomponente mit einem Siedebeginn von 254°C, einem Siedeendpunkt von 282°C, jeweils bei einem Druck von 1013 hPa, einer VDK von 0,806, einer kinematischen Viskosität von 2,9 $mm^2/s$, gemessen bei 40°C, einem Pourpoint von -40°C, einem Gehalt an naphthenischen Kohlenstoffatomen von 34% $C_N$ und einem Gehalt an paraffinischen Kohlenstoffatomen von 66% $C_P$.

KWG-4: Kohlenwasserstoffkomponente mit einem Siedebeginn von 256°C, einem Siedeendpunkt von 329°C, jeweils bei einem Druck von 1013 hPa, einer VDK von 0,798, einer kinematischen Viskosität von 3,5 $mm^2/s$, gemessen bei 40°C, einem Pourpoint von -25°C, einem Gehalt an naphthenischen Kohlenstoffatomen von 31% $C_N$ und einem Gehalt an paraffinischen Kohlenstoffatomen von 69% $C_P$.

KWG-5: Kohlenwasserstoffkomponente mit einem Siedebeginn von 304°C, einem Siedeendpunkt von 347°C, jeweils bei einem Druck von 1013 hPa, einer VDK von 0,787, einer kinematischen Viskosität von 6,0 $mm^2/s$, gemessen bei 40°C, einem Pourpoint von -2°C, einem Gehalt an naphthenischen Kohlenstoffatomen von 21% $C_N$ und einem Gehalt an paraffinischen Kohlenstoffatomen von 79% $C_P$.

KWG-6: Kohlenwasserstoffkomponente mit einem Siedebeginn von 300°C, einem Siedeendpunkt von 350°C, jeweils bei einem Druck von 1013 hPa, einer VDK von 0,791, einer kinematischen Viskosität von 6,1 $mm^2/s$, gemessen bei 40°C, einem Pourpoint von -48°C, einem Gehalt an naphthenischen Kohlenstoffatomen von 26% $C_N$ und einem Gehalt an paraffinischen Kohlenstoffatomen von 72% $C_P$.

**KWG-7:** Kohlenwasserstoffkomponente mit einem Siedebeginn von 300°C, einem Siedeendpunkt von 350°C, jeweils bei einem Druck von 1013 hPa, einer VDK von 0,790, einer kinematischen Viskosität von 6,0 $mm^2/s$, gemessen bei 40°C, einem Pourpoint von -18°C, einem Gehalt an naphthenischen Kohlenstoffatomen von 27% $C_N$ und einem Gehalt an paraffinischen Kohlenstoffatomen von 73% $C_P$.

**Beispiel 1**

100 Gewichtsteile eines $\alpha,\omega$-Dihydroxypolydimethylsiloxans mit einer dynamischen Viskosität von 75 000 mPa·s bei 25°C (käuflich erhältlich unter der Bezeichnung Polymer FD 80 bei der Wacker Chemie AG, D-München), 63 Gewichtsteile KWG-1 und 8 Gewichtsteile Ethyltrisacetoxysilan (käuflich erhältlich unter der Bezeichnung Vernetzer ES 23 bei der Wacker Chemie AG, D-München) wurden in einem Planetenmischer miteinander vermischt und 15 min gerührt. Anschließend wurden 37,8 Gewichtsteile eines pyrogenen Siliciumdioxids mit einer spezifischen BET-Oberfläche von 52 $m^2/g$ und einer relativen Verdickungswirkung von 2,0 (käuflich erhältlich unter der Bezeichnung HDK® D05 bei der Wacker Chemie AG, D-München), eingemischt und die Mischung wurde bei 100 mbar Absolutdruck vollständig homogenisiert. Zuletzt wurden 0,018 Gewichtsteile Dibutylzinndiacetat zugegeben und die Mischung nochmals 5 min bei 100 mbar Absolutdruck gerührt. Die so erhaltene RTV-1-Dichtmasse wurde in feuchtigkeitsdichte handelsübliche Polyethylen-Kartuschen abgefüllt.

**Beispiel 2**

Die in Beispiel 1 beschriebene Verfahrensweise wird wiederholt mit der Abänderung, dass anstelle von 63 Gewichtsteilen KWG-1 63 Gewichtsteile KWG-2 eingesetzt wurden.

**Beispiel 3**

Die in Beispiel 1 beschriebene Verfahrensweise wird wiederholt mit der Abänderung, dass anstelle von 63 Gewichtsteilen KWG-1 63 Gewichtsteile KWG-3 eingesetzt wurden.

**Beispiel 4**

Die in Beispiel 1 beschriebene Verfahrensweise wird wiederholt mit der Abänderung, dass anstelle von 63 Gewichtsteilen KWG-1 63 Gewichtsteile KWG-4 eingesetzt wurden.

**Vergleichsbeispiel V1**

Die in Beispiel 1 beschriebene Verfahrensweise wird wiederholt mit der Abänderung, dass anstelle von 63 Gewichtsteilen KWG-1 63 Gewichtsteile KWG-5 eingesetzt wurden.

**Vergleichsbeispiel V2**

Die in Beispiel 1 beschriebene Verfahrensweise wird wiederholt mit der Abänderung, dass anstelle von 63 Gewichtsteilen KWG-1 63 Gewichtsteile KWG-6 eingesetzt wurden.

**Vergleichsbeispiel V3**

Die in Beispiel 1 beschriebene Verfahrensweise wird wiederholt mit der Abänderung, dass anstelle von 63 Gewichtsteilen KWG-1 63 Gewichtsteile KWG-7 eingesetzt wurden.

**Vergleichsbeispiel V4**

Die in Beispiel 1 beschriebene Verfahrensweise wird wiederholt mit der Abänderung, dass anstelle von 63 Gewichtsteilen KWG-1 63 Gewichtsteile eines $\alpha,\omega$-Bis(trimethylsiloxy)polydimethylsiloxans mit einer dynamischen Viskosität von 100 mPa·s bei 25°C (käuflich erhältlich unter der Bezeichnung Siliconöl AK 100 bei der Wacker Chemie AG, D-München) eingesetzt wurden.

**Vergleichsbeispiel V5**

Die in Beispiel 1 beschriebene Verfahrensweise wird wiederholt mit der Abänderung, dass anstelle von 63 Gewichtsteilen KWG-1 63 Gewichtsteile eines $\alpha,\omega$-Bis(trimethylsiloxy)polydimethylsiloxans mit einer dynamischen Viskosität von 10 mPa·s bei 25°C (käuflich erhältlich unter der Bezeichnung Siliconöl AK 10 bei der Wacker Chemie AG, D-München) eingesetzt wurden.

**Beispiel 5**

Die in Beispiel 1 beschriebene Verfahrensweise wird wiederholt mit der Abänderung, dass anstelle von 37,8 Gewichtsteilen der in Beispiel 1 verwendeten pyrogenen Siliciumdioxids mit einer spezifischen BET-Oberfläche von 52 $m^2$/g 31,0 Gewichtsteile eines pyrogenen Siliciumdioxids mit einer spezifischen BET-Oberfläche von 101 $m^2$/g und einer relativen Verdickungswirkung von 2,8 (käuflich erhältlich unter der Bezeichnung HDK® C10 bei der Wacker Chemie AG, D-München) eingesetzt wurden.

**Beispiel 6**

Die in Beispiel 1 beschriebene Verfahrensweise wird wiederholt mit der Abänderung, dass anstelle von 37,8 Gewichtsteilen des in Beispiel 1 verwendeten pyrogenen Siliciumdioxids mit einer spezifischen BET-Oberfläche von 52 m$^2$/g 31,0 Gewichtsteile eines pyrogenen Siliciumdioxids mit einer spezifischen BET-Oberfläche von 90 m$^2$/g und einer relativen Verdickungswirkung von 3,5 (käuflich erhältlich unter der Bezeichnung AEROSIL® 90 bei der Evonik Industries AG, D-Hanau) eingesetzt wurden.

**Vergleichsbeispiel V6**

Die in Beispiel 1 beschriebene Verfahrensweise wird wiederholt mit der Abänderung, dass anstelle von 37,8 Gewichtsteilen des in Beispiel 1 genannten pyrogenen Siliciumdioxids mit einer spezifischen BET-Oberfläche von 52 m$^2$/g und einer relativen Verdickungswirkung von 2,0, 25,0 Gewichtsteile eines pyrogenen Siliciumdioxids mit einer spezifischen BET-Oberfläche von 155 m$^2$/g und einer relativen Verdickungswirkung von 4,5 (käuflich erhältlich unter der Bezeichnung HDK® V15 bei der Wacker Chemie AG, D-München) eingesetzt wurden.

**Beispiel 7**

100 Gewichtsteile eines α,ω-Dihydroxypolydimethylsiloxans mit einer dynamischen Viskosität von 75 000 mPa·s bei 25°C (käuflich erhältlich unter der Bezeichnung Polymer FD 80 bei der Wacker Chemie AG, D-München), 63 Gewichtsteile KWG-1, 3,5 Gewichtsteile (2,3,5,6-Tetrahydro-1,4-oxazin-4-yl)methyl-triethoxysilan, 3,5 Gewichtsteile eines Methyltriethoxysilan-Hydrolysats mit einem Ethoxygehalt von 37% (käuflich erhältlich unter der Bezeichnung TRASIL® bei der Wacker Chemie AG, D-München), 0,1 Gewichtsteile 1,2-Bis(triethoxysilyl)ethan (käuflich erhältlich unter der Bezeichnung Vernetzer ET 13 bei der Wacker Chemie AG, D-München), 1,3 Gewichtsteile Tetraethylsilikat (käuflich erhältlich unter der Bezeichnung Silikat TES 28 bei der Wacker Chemie AG, D-München), 2,7 Gewichtsteile Vinyltriethoxysilan (käuflich erhältlich unter der Bezeichnung GENIOSIL® GF 56 bei der Wacker Chemie AG, D-München), 3 Gewichtsteile 3-Aminopropyltriethoxysilan (käuflich erhältlich unter der Bezeichnung GENIOSIL® GF 93 bei der Wacker Chemie AG, D-München) und 0,6 Gewichtsteile eines Polyethylenglykolpolypropylenglykol-copolymers mit einer dynamischen Viskosität von 200 mPa·s bei 50 °C(käuflich erhältlich unter der Bezeichnung Stabilisator 43 bei der Wacker Chemie AG, D-München) wurden in einem Planetenmischer vorgelegt und 30 Minuten vermischt. Anschließend wurden 45 Gewichtsteile eines pyrogenen Siliciumdioxids mit einer spezifischen BET-Oberfläche von 52 m$^2$/g und einer relativen Verdickungswirkung von 2,0 (käuflich erhältlich unter der Bezeichnung HDK® D05 bei der Wacker Chemie AG, D-München) eingemischt, und die Mischung wurde bei ca. 100 mbar Absolutdruck vollständig homogenisiert. Anschließend wurde der Ansatz durch Einmischen von 0,5 Gewichtsteilen einer Lösung von n-Octylphosphonsäure in Methyltrimethoxysilan und 0,23 Gewichtsteile eines Zinnkatalysators, der hergestellt wird durch Umsetzung von Di-n-butylzinndiacetat und Tetraethoxysilan (käuflich erhältlich unter der Bezeichnung Katalysator 41 bei der Wacker Chemie AG, D-München), vervollständigt. Zum Schluss wurde die Mischung 5 Minuten bei ca. 100 mbar Absolutdruck gerührt. Die so erhaltene RTV-1-Dichtmasse wurde in feuchtigkeitsdichte handelsübliche Polyethylen-Kartuschen abgefüllt.

**Beispiel 8**

103,5 Gewichtsteile eines methyldimethoxysilyl-endterminierten Polydimethylsiloxans mit einer dynamischen Viskosität von 50 000 mPa·s bei 25°C (käuflich erhältlich unter der Bezeichnung Polymer NG 410-50 000 bei der Wacker Chemie AG, D-München) und 63 Gewichtsteile KWG-1 wurden in einem Planetenmischer vorgelegt und 5 Minuten gerührt. Anschließend wurden 3,0 Gewichtsteile Methyltrimethoxysilan (käuflich erhältlich unter der Bezeichnung Silan M1-Trimethoxy bei der Wacker Chemie AG, D-München) und 3,0 Gewichtsteile Vinyltrimethoxysilan (käuflich erhältlich unter der Bezeichnung GENIOSIL® XL10 bei der Wacker Chemie AG, D-München) hinzugefügt und 10 Minuten gerührt. Anschließend wurde der Ansatz durch Einmischen von 3,0 Gewichtsteilen Bis(ethylacetoacetato)diisobutoxytitanium (käuflich erhältlich unter der Bezeichnung Tyzor® IBAY bei der Du Pont de Nemours (Belgien) BVBA, B-Kallo) erweitert und weitere 10 Minuten gerührt. Anschließend wurde der Ansatz durch homogenes Einmischen von 38 Gewichtsteilen eines pyrogenen Siliciumdioxids mit einer spezifischen BET-Oberfläche von 52 m$^2$/g und einer relativen Verdickungswirkung von 2,0 (käuflich erhältlich unter der Bezeichnung HDK® D05 bei der Wacker Chemie AG, D-München) vervollständigt. Zum Schluss wurde die Mischung 10 Minuten bei ca. 100 mbar Absolutdruck gerührt. Die so erhaltene RTV-1-Dichtmasse wurde in feuchtigkeitsdichte handelsübliche Polyethylen-Kartuschen abgefüllt.

**Beispiel 9**

100 Gewichtsteile eines α,ω-Dihydroxypolydimethylsiloxans mit einer dynamischen Viskosität von 75 000 mPa·s bei 25°C (käuflich erhältlich unter der Bezeichnung Polymer FD 80 bei der Wacker Chemie AG, D-München)), 63 Gewichtsteile KWG-1, 7,1 Gewichtsteile Methyltris(methylethylketoximino)silan (käuflich erhältlich unter der Bezeichnung OS® 1000 bei der Honeywell International, Inc., Morristown, NJ 07962 USA), 2,6 Gewichtsteile eines Vinyltris(methylethylketoximino)silan (käuflich erhältlich unter der Bezeichnung OS® 2000 bei der Honeywell International, Inc., Morristown, NJ 07962 USA) und 1,5 Gewichtsteile 3-Aminopropyltriethoxysilan (käuflich erhältlich unter der Bezeichnung GENIOSIL® GF 93 bei der Wacker Chemie AG, D-München) wurden in einem Planetenmischer vorgelegt und 30 Minuten vermischt. Anschließend wurden 56 Gewichtsteile eines pyrogenen Siliciumdioxids mit einer spezifischen BET-Oberfläche von 52 $m^2$/g und einer relativen Verdickungswirkung von 2,0 (käuflich erhältlich unter der Bezeichnung HDK® D05 bei der Wacker Chemie AG, D-München) eingemischt, und die Mischung wurde bei ca. 100 mbar Absolutdruck vollständig homogenisiert. Zuletzt wurde der Ansatz durch Einmischen von 0,1 Gewichtsteilen Dioctylzinndilaurat (käuflich erhältlich unter der Bezeichnung Metatin® Katalysator 812 ES bei Rohm und Haas, D-Frankfurt) vervollständigt. Zum Schluss wurde die Mischung nochmals 5 min bei ca. 100 mbar Absolutdruck gerührt. Die so erhaltene RTV-1-Dichtmasse wurde in feuchtigkeitsdichte handelsübliche Polyethylen-Kartuschen abgefüllt.

**Beispiel 10**

Die in den oben beschriebenen Beispielen erhaltenen Massen wurden hinsichtlich Standfestigkeit, Extrusionsrate, Hautbildungszeit, Modul 100%, Zugfestigkeit, Shore A-Härte, Weiterreißfestigkeit und Ausölverhalten untersucht.

**Beschreibung der Prüfmethoden**

Vor Beurteilung der Eigenschaften (Standfestigkeit, Extrusionsrate, Hautbildungszeit, Modul 100%, Zugfestigkeit, Shore A-Härte, Weiterreißfestigkeit und Ausölverhalten) nach den unten beschriebenen Prüfmethoden wurden Proben des jeweiligen Produkts zunächst in luft- und feuchtigkeitsdicht verschlossenen Kartuschen für 24 Stunden bei 23°C gelagert.

Die **Hautbildungszeit** wurde bei 50% relativer Luftfeuchtigkeit und 23°C ermittelt. Dabei wurde die Oberfläche einer frisch ausgestrichenen Masse in Abständen von 3 Minuten mit der Spitze eines zuvor angespitzten Bleistifts mit der Härte HB leicht berührt. Die Hautbildungszeit ist dann erreicht, wenn an der Spitze des Bleistifts keine Masse mehr hängenbleibt.

Die **Standfestigkeit** wurde entsprechend der DIN EN ISO 7390 ermittelt: In einem U-Profil aus Aluminium mit den Dimensionen 150 mm x 20 mm x 10 mm (Länge x Breite x Tiefe) wurde die jeweilige Masse verfüllt, anschließend wurde der Prüfkörper in die Senkrechte aufgerichtet und bei Raumtemperatur gelagert. Mit der Auswertung wurde 2 Stunden nach dem Aufstellen des Prüfkörpers begonnen. Nach weiteren 2 Stunden wurde nochmals kontrolliert und, falls eine Veränderung eingetreten war, erfolgte eine weitere Kontrolle nach 2 Stunden. Dabei wurde jeweils beurteilt, ob die Masse nach unten aus dem Profil herausgetreten ist. Das Ergebnis wurde mit positiv (pos) beurteilt wenn der Dichtstoff maximal 2 mm aus dem Profil ausgetreten war; das Ergebnis wurde mit negativ (neg) beurteilt, wenn der Dichtstoff mehr als 2 mm aus dem Profil ausgetreten war.

Für die Bestimmung der mechanischen Kenndaten (Modul 100%, Zugfestigkeit, Weiterreißfestigkeit) wurden jeweils 2 mm dicke Felle auf Polyethylenfolien ausgestrichen, die nach 24 Stunden Aushärtung von der Folie abgelöst und so aufgehängt wurden, dass für weitere 144 Stunden von allen Seiten Luft zutreten konnte, so dass die Proben über insgesamt 168 Stunden ausgehärtet wurden. Die relative Luftfeuchtigkeit betrug dabei 50% bei einer Temperatur von 23°C. Zur Bestimmung der mechanischen Kennwerte **Modul 100%** und **Zugfestigkeit** wurden jeweils sieben Prüfkörper der Form S2 gemäß DIN 53504 aus dem Vulkanisat ausgestanzt; der angegebene Wert für den Modul 100% und für die Zugfestigkeit entspricht dem jeweiligen Mittelwert der Einzelmessungen. Zur Bestimmung der **Weiterreißfestigkeit** wurden jeweils drei Prüfkörper nach Methode C gemäß DIN ISO 34-1 in zwei Richtungen, die in einem Winkel von 90° zueinander lagen, aus dem Vulkanisat ausgestanzt; der angegebene Wert entspricht dem Mittelwert der Medianwerte für beide Entnahmerichtungen und wurde auf ganze Zahlen gerundet.

Zur Bestimmung der **Shore A-Härte** gemäß DIN 53505 wurden 6 mm dicke Probekörper hergestellt, die ebenfalls über 168 Stunden bei einer relativen Luftfeuchtigkeit von 50% und einer Temperatur von 23°C durch Reaktion mit der umgebenden Luftfeuchtigkeit ausgehärtet wurden.

Für das **Ausölverhalten** wurden 2 mm dicke Felle auf Polyethylenfolien ausgestrichen, die über 72 Stunden bei einer relativen Luftfeuchtigkeit von 50% und einer Temperatur von 23°C durch Reaktion mit der umgebenden Luftfeuchtigkeit ausgehärtet wurden. Nach der Lagerung wurden aus den Vulkanisatfellen Prüfkörper von 8 cm x 3 cm (Länge x Breite) Größe herausgeschnitten und gewogen (= Masse $m_1$). Die gewogenen Prüfkörper wurden zwischen zwei vorher ausgewogenen Filterpapierblättern (= Masse $m_2$) gelegt. Das Filterpapier wird so ausgewählt, dass es das eventuell austretende Öl vollständig aufsaugt (z.B. ein Filterpapier der Marke Whatman® 589/2). Jeweils ein Prüfkörper wurde anschließend 3 Stunden bei einer Temperatur von 23°C und einer relativen Luftfeuchtigkeit von 50%, bei einer Temperatur von 0°C und einer relativen Luftfeuchtigkeit von 50% bzw. in einem handelsüblichen Gefrierschrank bei -20°C gelagert. Danach wurden beide Filterpapierblätter kurz mit der Hand angepresst, die Prüfkörper entnommen und die Filterpapierblätter erneut gewogen (= Masse $m_3$). Das Ausölverhalten, angegeben in Gewichts-%, entspricht dem Quotienten aus Massendifferenz ($m_3$ - $m_2$) und Masse $m_1$, multipliziert mit 100%, und ist ein Maß für die Unverträglichkeit von dem Weichmacher mit der Silicongummimatrix:

$$\text{Ausölverhalten} = (m_3 - m_2) / m_1 \times 100\%$$

Für die Bestimmung der **Extrusions- bzw. Auspressrate** wurde eine volle Kartusche mit etwa 300 ml Inhalt bei einem Auspressdruck von 2,5 bar und einer Düsenöffnung von 3 mm 15 Sekunden lang entleert, die Masse an ausgepresster Paste wurde gewogen. Das Ergebnis wurde dann mit vier multipliziert und somit auf eine Auspressrate in Gramm pro Minute extrapoliert.

Die Ergebnisse finden sich in den Tabellen 1 bis 3:

Tabelle 1:

| Beispiel | | 1 | 2 | 3 | 4 | 5 | 6 |
|---|---|---|---|---|---|---|---|
| Siliciumdioxids Gewichtsteile | | D05 37,8 | D05 37,8 | D05 37,8 | D05 37,8 | C10 30,0 | AE90 31,0 |
| Weichmacher Gewichtsteile | | KWG-1 63,0 | KWG-2 63,0 | KWG-3 63,0 | KWG-4 63,0 | KWG-1 63,0 | KWG-1 63,0 |
| Standfestigkeit | | pos | pos | pos | Pos | pos | pos |
| Extrusionsrate | [g/min] | 84 | 124 | 96 | 92 | 48 | 68 |
| Hautbildungszeit | [min] | 24 | 21 | 21 | 21 | 12 | 12 |
| Modul 100% | [MPa] | 0,39 | 0,44 | 0,41 | 0,39 | 0,46 | 0,50 |
| Zugfestigkeit | [MPa] | 2,13 | 2,98 | 2,52 | 2,49 | 2,49 | 1,80 |
| Härte[Shore A] | | 24 | 26 | 25 | 25 | 24 | 25 |
| Weiterreißfestigkeit | [kN/m] | 11 | 14 | 12 | 11 | 19 | 11 |
| Ausölverhalten (23°C) | [%] | 0,0 | 0,0 | 0,0 | 0,0 | 0,0 | 0,0 |
| Ausölverhalten (0°C) | [%] | 0,0 | 0,2 | 0,1 | 0,0 | 0,0 | 0,0 |
| Ausölverhalten (-20°C) | [%] | 0,0 | 0,0 | 0,0 | 0,0 | 0,0 | 0,0 |

Tabelle 2:

| Beispiel | | V1 | V2 | V3 | V4 | V5 |
|---|---|---|---|---|---|---|
| Siliciumdioxid Gewichtsteile | | D05 37,8 | D05 37,8 | D05 37,8 | D05 37,8 | D05 37,8 |
| Weichmacher Gewichtsteile | | KWG-5 63,0 | KWG-6 63,0 | KWG-7 63,0 | AK100 63,0 | AK10 63,0 |
| Standfestigkeit | | pos | pos | pos | pos | pos |
| Extrusionsrate | [g/min] | 72 | 76 | 80 | 36 | 56 |
| Hautbildungszeit | [min] | 9 | 9 | 15 | 21 | 18 |
| Modul 100% | [MPa] | 0,41 | 0,41 | 0,40 | 0,36 | 0,24 |
| Zugfestigkeit | [MPa] | 1,49 | 0,98 | 1,31 | 1,89 | 1,42 |
| Härte [Shore A] | | 25 | 24 | 25 | 24 | 16 |
| Weiterreißfestigkeit | [kN/m] | 5 | 4 | 5 | 14 | 8 |
| Ausölverhalten (23°C) | [%] | 0,5 | 0,4 | 3,1 | 0,0 | 0,0 |
| Ausölverhalten (0°C) | [%] | 2,1 | 3,0 | 2,3 | 0,0 | 0,0 |

(fortgesetzt)

| Beispiel | | V1 | V2 | V3 | V4 | V5 |
|---|---|---|---|---|---|---|
| Ausölverhalten (-20°C) | [%] | 0,7 | 2,8 | 1,4 | 0,0 | 0,0 |

Tabelle 3:

| Beispiel | | V6 | 7 | 8 | 9 |
|---|---|---|---|---|---|
| Siliciumdioxid Gewichtsteile | | V15 25,0 | D05 45,0 | D05 43,0 | D05 56,0 |
| Weichmacher Gewichtsteile | | KWG-1 63,0 | KWG-1 63,0 | KWG-1 63,0 | KWG-1 63,0 |
| Standfestigkeit | | pos | pos | pos | pos |
| Extrusionsrate | [g/min] | 12 | 48 | 132 | 52 |
| Hautbildungszeit | [min] | 6 | 9 | 15 | 9 |
| Modul 100% | [MPa] | 0,42 | 0,45 | 0,41 | 0,56 |
| Zugfestigkeit | [MPa] | 2,22 | 1,95 | 1,76 | 2,09 |
| Härte[Shore A] | | 22 | 30 | 28 | 35 |
| Weiterreißfestigkeit | [kN/m] | 6 | 11 | 10 | 15 |
| Ausölverhalten (23°C) | [%] | 0,0 | 0,0 | 0,0 | 0,0 |
| Ausölverhalten (0°C) | [%] | 0,0 | 0,0 | 0,0 | 0,0 |
| Ausölverhalten (-20°C) | [%] | 0,0 | 0,0 | 0,0 | 0,0 |

**Patentansprüche**

1. Durch Kondensationsreaktion vernetzbare Massen enthaltend

(A) mindestens eine Organosiliciumverbindung mit mindestens zwei kondensationsfähigen Resten,

(B) mindestens ein hochdisperses Siliciumdioxid mit einer BET-Oberfläche von 30 bis 120 $m^2$/g bestimmt nach DIN ISO 9277/DIN 66132 und einer relativen Verdickungswirkung $\eta_{rel}$ von 1,4 bis 10, wobei als Verdickungswirkung der dynamische Viskositätswert in mPa·s einer Dispersion bei 25°C bezeichnet wird, der mit einem Rotationsviskosimeter (RS600 der Firma Haake, Messsystem nach DIN 53019, Kegel-Platte, C60/2 Ti) bei einer Scherrate von 10 $s^{-1}$ ermittelt wird und die "relative Verdickungswirkung" $\eta_{rel}$ der Quotient aus $\eta$ und $\eta_0$ ist, wobei $\eta$ die dynamische Viskosität der Flüssigkeit mit Siliciumdioxid und $\eta_0$ der dynamischen Viskosität der reinen Flüssigkeit ohne Siliciumdioxid entspricht: $\eta_{rel} = \eta/\eta_0$ und die Dispersion erhalten wird, indem bei einer Temperatur von 23°C in einem 0,5 l Becher 4,5 g Siliciumdioxidpulver zu 145,5 g einer Lösung eines ungesättigten Polyesterharzes auf Isophthalsäurebasis in Styrol, die eine dynamische Viskosität von 1000 $\pm$ 100 mPa·s bei 23°C und einem Styrolmassenanteil von 34%, gemessen nach DIN 16945, 4.14, aufweist (käuflich erhältlich unter dem Namen Palatal® P6 bei der BASF SE, D-Ludwigshafen), eingerührt wird und anschließend mittels eines Dissolvers (Pendraulik Labordissolver LD 50 mit Zahnscheibe 40 mm) bei 2800 $min^{-1}$ 5 min dispergiert wird und der Abstand der Dissolverscheibe zum Becherboden dabei ca. 20 mm beträgt und der Becher während des Dispergierens mit einem durchbohrten Deckel abgedeckt wird, und

(C) mindestens eine Kohlenwasserstoffkomponente, welche einen Siedebeginn oberhalb 150°C, einen Siedeendpunkt unterhalb 350°C, jeweils bei einem Druck von 1013 hPa, eine kinematische Viskosität von 1,5 bis 6,0 $mm^2$/s gemessen bei 40°C nach ASTM D 445-12, eine Viskositäts-Dichte-Konstante (VDK) von kleiner oder gleich 0,820, einen Pourpoint von kleiner -5°C und einen Gehalt an aromatischen Kohlenstoffatomen ($C_A$) von weniger als 0,1% $C_A$ aufweist, wobei der Siedebeginn sowie der Siedeendpunkt jeweils nach ASTM D 86 bestimmt wird, die Viskositäts-Dichte-Konstante (VDK) nach ASTM D 2140-08 ermittelt wird, wobei die für die Berechnung der VDK erforderliche relative Dichte bei 15,6°C nach ASTM D 1481-12 gemessen wird, und der Pourpoint nach ASTM D 97 gemessen wird.

2. Massen gemäß Anspruch 1, **dadurch gekennzeichnet, dass** es sich bei den Organosiliciumverbindungen (A) um solche handelt, enthaltend Einheiten der Formel

$$R_aY_bSiO_{(4-a-b)/2} \qquad (I),$$

wobei

R gleich oder verschieden sein kann und gegebenenfalls substituierte Kohlenwasserstoffreste, die durch Sauerstoffatome unterbrochen sein können, bedeutet,

Y gleich oder verschieden sein kann und Hydroxylrest oder hydrolysierbare Reste bedeutet,

a 0, 1, 2 oder 3 ist und

b 0, 1, 2 oder 3 ist,

mit der Maßgabe, dass die Summe aus a+b kleiner oder gleich 3 ist und pro Molekül mindestens zwei Reste Y anwesend sind.

3.  Massen gemäß Anspruch 1 oder 2, **dadurch gekennzeichnet, dass** es sich bei Komponente (B) um hydrophiles, pyrogen erzeugtes, hochdisperses Siliciumdioxid handelt.

4.  Massen gemäß einem oder mehreren der Ansprüche 1 bis 3, **dadurch gekennzeichnet, dass** sie Komponente (B) in Mengen von 10 bis 100 Gewichtsteilen, bezogen auf 100 Gewichtsteile Organosiliciumverbindung (A), enthalten.

5.  Massen gemäß einem oder mehreren der Ansprüche 1 bis 4, **dadurch gekennzeichnet, dass** Komponente (C) 60 bis 80% paraffinische Kohlenstoffatome, 20 bis 40% naphthenische Kohlenstoffatome und weniger als 0,1% aromatische Kohlenstoffatome enthält.

6.  Massen gemäß einem oder mehreren der Ansprüche 1 bis 5, **dadurch gekennzeichnet, dass** sie Komponente (C) in Mengen von 20 bis 150 Gewichtsteilen, bezogen auf 100 Gewichtsteile Organosiliciumverbindung (A), enthalten.

7.  Massen gemäß einem oder mehreren der Ansprüche 1 bis 6, **dadurch gekennzeichnet, dass** es sich um solche handelt, enthaltend

    (A) mindestens eine Organosiliciumverbindung der Formel (II),
    (B) mindestens ein hochdisperses Siliciumdioxid,
    (C) mindestens eine Kohlenwasserstoffkomponente,
    (E) mindestens einen Vernetzer der Formel (III), gegebenenfalls
    (D) Härtungsbeschleuniger,
    gegebenenfalls
    (F) Füllstoffe und
    gegebenenfalls
    (G) Additive.

8.  Massen gemäß einem oder mehreren der Ansprüche 1 bis 7, **dadurch gekennzeichnet, dass** es sich um solche handelt, enthaltend

    (A) mindestens eine Organosiliciumverbindung der Formel (II),
    (B) mindestens ein hochdisperses Siliciumdioxid,
    (C) mindestens eine Kohlenwasserstoffkomponente,
    (E) mindestens einen Vernetzer der Formel (III),
    (D) mindestens einen Härtungsbeschleuniger
    und gegebenenfalls
    (G) Additive.

9.  Verfahren zur Herstellung der Massen gemäß einem oder mehreren der Ansprüche 1 bis 8, durch Vermischen der einzelnen Bestandteile.

10. Formkörper, hergestellt durch Vernetzung der Massen gemäß einem oder mehreren der Ansprüche 1 bis 8 oder hergestellt nach Anspruch 9.

11. Formkörper gemäß Anspruch 10, **dadurch gekennzeichnet, dass** sie eine Weiterreißfestigkeit von mindestens 10 kN/m haben, gemessen nach Methode C gemäß DIN ISO 34-1.

**Claims**

1. Compositions crosslinkable by condensation reaction, comprising

    (A) at least one organosilicon compound having at least two condensable radicals,

    (B) at least one finely divided silicon dioxide having a BET surface area of 30 to 120 $m^2$/g determined in accordance with DIN ISO 9277/DIN 66132 and a relative thickening effect $\eta_{rel}$ of 1.4 to 10, where thickening effect identifies the dynamic viscosity in mPa·s of a dispersion at 25°C, as determined using a rotational viscosimeter (RS600 from Haake, DIN 53019 measuring system, cone/plate, C60/2 Ti) at a shear rate of 10 $s^{-1}$, and the "relative thickening effect" $\eta_{rel}$ is the ratio of $\eta$ to $\eta_0$, where $\eta$ corresponds to the dynamic viscosity of the liquid with silicon dioxide, and $\eta_0$ to the dynamic viscosity of the pure liquid without silicon dioxide: $\eta_{rel} = \eta/\eta_0$, and the dispersion is obtained by incorporating 4.5 g of silicon dioxide powder into 145.5 g of a styrene solution of an unsaturated, isophthalic acid-based polyester resin, said solution having a dynamic viscosity of $1000 \pm 100$ mPa·s at 23°C and a styrene mass fraction of 34%, measured in accordance with DIN 16945, 4.14 (available commercially under the name Palatal® P6 from BASF SE, Ludwigshafen, DE), with stirring at a temperature of 23°C in a 0.5 l beaker, and then carrying out dispersion using a dissolver (Pendraulik laboratory dissolver LD 50 with 40 mm toothed disk) at 2800 $min^{-1}$ for 5 minutes, and the distance of the dissolver disk from the bottom of the beaker in this procedure is approximately 20 mm, and, in the course of the dispersing procedure, the beaker is covered with a drilled lid, and

    (C) at least one hydrocarbon component which has an initial boiling point above 150°C, a final boiling point below 350°C, each at a pressure of 1013 hPa, a kinematic viscosity of 1.5 to 6.0 $mm^2$/s as measured at 40°C in accordance with ASTM D 445-12, a viscosity-density constant (VDC) of less than or equal to 0.820, a pour point of less than -5°C, and an aromatic carbon atom ($C_A$) content of less than 0.1% $C_A$, where the initial boiling point and the final boiling point are each determined according to ASTM D 86, the viscosity-density constant (VDC) is determined in accordance with ASTM D 2140-08, where the relative density needed for the calculation of the VDC is measured at 15.6°C in accordance with ASTM D 1481-12, and the pour point is measured in accordance with ASTM D 97.

2. Compositions according to Claim 1, **characterized in that** the organosilicon compounds (A) are compounds comprising units of the formula

    $$R_a Y_b SiO_{(4-a-b)/2} \qquad (I),$$

    where
    R may be identical or different and denotes optionally substituted hydrocarbon radicals which may be interrupted by oxygen atoms,
    Y may be identical or different and denotes hydroxyl radical or hydrolyzable radicals,
    a is 0, 1, 2, or 3, and
    b is 0, 1, 2, or 3,
    with the proviso that the sum total of a+b is less than or equal to 3 and there are at least two radicals Y present per molecule.

3. Compositions according to Claim 1 or 2, **characterized in that** component (B) comprises hydrophilic, pyrogenically produced, finely divided silicon dioxide.

4. Compositions according to one or more of Claims 1 to 3, **characterized in that** they comprise component (B) in amounts of 10 to 100 parts by weight, based on 100 parts by weight of organosilicon compound (A).

5. Compositions according to one or more of Claims 1 to 4, **characterized in that** component (C) comprises 60% to 80% of paraffinic carbon atoms, 20% to 40% of naphthenic carbon atoms, and less than 0.1% of aromatic carbon atoms.

6. Compositions according to one or more of Claims 1 to 5, **characterized in that** they comprise component (C) in amounts of 20 to 150 parts by weight, based on 100 parts by weight of organosilicon compound (A).

7.  Compositions according to one or more of Claims 1 to 6, **characterized in that** they comprise

    (A) at least one organosilicon compound of the formula (II), (B) at least one finely divided silicon dioxide,
    (C) at least one hydrocarbon component,
    (E) at least one crosslinker of the formula (III),
    optionally
    (D) curing accelerators,
    optionally
    (F) fillers, and
    optionally
    (G) additives.

8.  Compositions according to one or more of Claims 1 to 7, **characterized in that** they comprise

    (A) at least one organosilicon compound of the formula (II),
    (B) at least one finely divided silicon dioxide,
    (C) at least one hydrocarbon component,
    (E) at least one crosslinker of the formula (III),
    (D) at least one curing accelerator,
    and optionally
    (G) additives.

9.  Method for producing the compositions according to one or more of Claims 1 to 8, by mixing the individual constituents.

10. Shaped articles produced by crosslinking the compositions according to one or more of Claims 1 to 8 or produced according to Claim 9.

11. Shaped articles according to Claim 10, **characterized in that** they have a tear resistance of at least 10 kN/m, measured according to method C of DIN ISO 34-1.

**Revendications**

1.  Matières réticulables par une réaction de condensation, contenant

    (A) au moins un composé organosilicié comportant au moins deux radicaux aptes à la condensation,
    (B) au moins un dioxyde de silicium hautement dispersé ayant une surface BET de 30 à 120 m$^2$/g, déterminée selon DIN ISO 9277/DIN 66132, et un effet épaississant relatif $\eta_{rel}$ de 1,4 à 10, en désignant par effet épaississant l'indice de viscosité dynamique en mPa·s d'une dispersion à 25 °C, qui est déterminé à l'aide d'un viscosimètre rotatif (RS600 de la société Haake, système de mesure selon DIN 53019, cône-plateau, C60/2 Ti) à une vitesse de cisaillement de 10 s$^{-1}$ et l'« effet épaississant relatif » $\eta_{rel}$ étant le quotient de $\eta$ et $\eta_0$, $\eta$ correspondant à la viscosité dynamique du liquide avec du dioxyde de silicium et $\eta_0$ correspondant à la viscosité dynamique du liquide pur sans dioxyde de silicium : $\eta_{rel} = \eta/\eta_0$ et la dispersion étant obtenue par addition sous agitation à une température de 23 °C, dans un becher de 0,5 l, de 4,5 g de poudre de dioxyde de silicium à 145,5 g d'une solution d'une résine polyester insaturée à base d'acide isophtalique dans du styrène, qui présente une viscosité dynamique de 1 000 $\pm$ 100 mPa·s à 23 °C et une teneur en masse de styrène de 34 %, mesurée selon DIN 16945, 4.14 (disponible dans le commerce sous la dénomination Palatal® P6 auprès de la société BASF SE, D-Ludwigshafen), et ensuite dispersion à 2 800 min$^{-1}$ pendant 5 min au moyen d'un dissolveur (Pendraulik Labordissolver LD 50 à disque denté de 40 mm) et la distance entre le disque du dissolveur et le fond du becher étant d'environ 20 mm et pendant la dispersion le becher étant couvert d'un couvercle perforé, et
    (C) au moins un composant hydrocarboné qui présente un point de début d'ébullition supérieur à 150 °C, un point de fin d'ébullition inférieur à 350 °C, chacun sous une pression de 1 013 hPa, une viscosité cinématique de 1,5 à 6,0 mm$^2$/s, mesurée à 40 °C selon ASTM D 445-12, une constante viscosité-densité (CVD) inférieure ou égale à 0,820, un point d'écoulement inférieur à -5 °C et une teneur en atomes de carbone aromatiques ($C_A$) de moins de 0,1 % de $C_A$, le point de début d'ébullition ainsi que le point de fin d'ébullition étant déterminés chacun selon ASTM D 86, la constante de viscosité-densité (CVD) étant déterminée selon ASTM D 2140-08, la densité relative requise pour le calcul de la CVD étant mesurée à 15,6 °C selon ASTM D 1481-12, et le point d'écoulement étant mesuré selon ASTM D 97.

**2.** Matières selon la revendication 1, **caractérisées en ce que** pour ce qui est des composés organosiliciés (A) il s'agit de ceux qui contiennent des unités de formule

$$R_a Y_b SiO_{(4-a-b)/2} \qquad (I)$$

dans laquelle
R peut être le même ou différent et représente des radicaux hydrocarbonés éventuellement substitués qui peuvent être interrompus par des atomes d'oxygène,
Y peut être le même ou différent et représente le radical hydroxy ou des radicaux hydrolysables,
a est 0, 1, 2 ou 3 et
b est 0, 1, 2 ou 3,
étant entendu que la somme de a+b est inférieure ou égale à 3 et qu'au moins deux radicaux Y sont présents par molécule.

**3.** Matières selon la revendication 1 ou 2, **caractérisées en ce que** pour ce qui est du composant (B) il s'agit de dioxyde de silicium hydrophile pyrogéné, hautement dispersé.

**4.** Matières selon une ou plusieurs des revendications 1 à 3, **caractérisées en ce qu'**elles contiennent le composant (B) en des quantités de 10 à 100 parties en poids, par rapport à 100 parties en poids de composé organosilicié (A).

**5.** Matières selon une ou plusieurs des revendications 1 à 4, **caractérisées en ce que** le composant (C) contient 60 à 80 % d'atomes de carbone paraffiniques, 20 à 40 % d'atomes de carbone naphténiques et moins de 0,1 % d'atomes de carbone aromatiques.

**6.** Matières selon une ou plusieurs des revendications 1 à 5, **caractérisées en ce qu'**elles contiennent le composant (C) en des quantités de 20 à 150 parties en poids, par rapport à 100 parties en poids de composé organosilicié (A).

**7.** Matières selon une ou plusieurs des revendications 1 à 6, **caractérisées en ce qu'**il s'agit de celles contenant

(A) au moins un composé organosilicié de formule (II),
(B) au moins un dioxyde de silicium hautement dispersé,
(C) au moins un composant hydrocarboné,
(E) au moins un agent de réticulation de formule (III),
éventuellement
(D) des accélérateurs de durcissement,
éventuellement
(F) des charges et
éventuellement
(G) des additifs.

**8.** Matières selon une ou plusieurs des revendications 1 à 7, **caractérisées en ce qu'**il s'agit de celles contenant

(A) au moins un composé organosilicié de formule (II),
(B) au moins un dioxyde de silicium hautement dispersé,
(C) au moins un composant hydrocarboné,
(E) au moins un agent de réticulation de formule (III),
(D) au moins un accélérateur de durcissement,
et éventuellement
(G) des additifs.

**9.** Procédé pour la préparation des matières selon une ou plusieurs des revendications 1 à 8, par mélange des composants individuels.

**10.** Corps moulés, produits par réticulation des matières selon une ou plusieurs des revendications 1 à 8 ou préparées selon la revendication 9.

**11.** Corps moulé selon la revendication 10, **caractérisés en ce qu'**ils ont une résistance à la propagation de la déchirure d'au moins 10 kN/m, mesurée conformément à la méthode C selon DIN ISO 34-1.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 885921 B1
- US 6451440 B2
- EP 1884541 B1
- US 20080245476 A1

### In der Beschreibung aufgeführte Nicht-Patentliteratur

- Ullmanns Enzyklopädie der technischen Chemie. 1982, vol. 21, 462